# EUROPEAN PATENT SPECIFICATION

(11) **EP 2 812 281 B1**
(45) Date of publication and mention of the grant of the patent: **29.07.2020**
(21) Application number: 13746342.8
(22) Date of filing: 06.02.2013
(51) Int. Cl.: C01B 39/00, B01J 29/00, B01J 29/70, B01J 29/72, B01J 29/78, B01J 29/76

(54) **IRON- AND COPPER-CONTAINING ZEOLITE BETA FROM ORGANOTEMPLATE-FREE SYNTHESIS AND USE THEREOF IN THE SELECTIVE CATALYTIC REDUCTION OF NOX**
EISEN- UND KUPFERHALTIGER ZEOLITH-BETA AUS ORGANOTEMPLATEFREIER SYNTHESE UND VERWENDUNG DAVON IN DER SELEKTIVEN KATALYTISCHEN NOX-REDUKTION
ZÉOLITHE BÊTA CONTENANT DU FER ET DU CUIVRE OBTENUE PAR SYNTHÈSE SANS MOLÉCULE ORGANIQUE STRUCTURANTE ET SON UTILISATION DANS LA RÉDUCTION CATALYTIQUE SÉLECTIVE DES NOX

(30) Priority: 06.02.2012 WO PCT/CN2012/070899
(43) Date of publication of application: 17.12.2014
(73) Proprietor: BASF SE, 67056 Ludwigshafen am Rhein (DE)
(72) Inventor: MAURER, Stefan, 67061 Ludwigshafen (DE); WYCISK, Michael, 7070 Bosberg (NO); PETRY, Julia, 67590 Monsheim (DE); DEUERLEIN, Stephan, 67061 Ludwigshafen (DE); ZHANG, Weiping, Dalian City North Gate Dut 116023 (CN); SHI, Chuan, Dalia C211 West Campus 116024 (CN); TAKASHI, Hihara, Shizuoka (JP)
(74) Representative: BASF IP Association
(86) International application number: PCT/IB2013/050984
(87) International publication number: WO 2013/118063

(56) References cited:
- WO-A1-2010/146156
- WO-A1-2010/146156
- WO-A1-2013/035077
- WO-A1-2013/118064
- WO-A2-2011/146615
- JP-A- H05 220 403
- US-A1- 2008 026 932
- US-A1- 2011 305 614

## Description

The present invention relates to a zeolitic material having a BEA-type framework structure comprising Cu and/or Fe as non-framework elements and to a process for the production of said material which does not involve the use of an organotemplate. Furthermore, the present invention relates to the use of the zeolitic material having a BEA-type framework structure comprising Cu and/or Fe as non-framework elements in a catalytic process, in particular as a catalyst for selective catalytic reduction (SCR), as well as to a method for the treatment of NOₓ by selective catalytic reduction (SCR) in which said zeolitic material is employed.

### INTRODUCTION

The most prominent and best studied example for a zeolitic material with a BEA-type framework structure is zeolite beta, which is a zeolite containing SiO₂ and Al₂O₃ in its framework and is considered to be one of the most important nanoporous catalysts with its three-dimensional 12-membered-ring (12MR) pore/channel system and has been widely used in petroleum refining and fine chemical industries. Zeolite beta was first described in U.S. Patent No. 3,308,069 and involved the use of the tetraethylammonium cation as the structure directing agent. Although numerous alterations and improvements had since then been made to the preparation procedure, including the use of other structure directing agents such as dibenzyl-1,4-diazabicyclo[2,2,2]octane in U.S. Patent No. 4,554,145 or dibenzylmethylammonium in U.S. Patent No. 4,642,226, the known processes for its preparation still relied on the use of organic template compounds. In US Patent No. 5,139,759, for example, it is reported that the absence of an organic template compound in the synthetic procedure of zeolite beta leads to the crystallization of ZSM-5 instead.

Recently, however, it has surprisingly been discovered that zeolite beta and related materials may be prepared in the absence of the organotemplates which until then had always been used as structure directing agent. Thus, in Xiao et al., Chem. Mater. 2008, 20, pp. 4533-4535 and Supporting Information, a process for the synthesis of zeolite beta is shown, in which crystallization of an aluminosilicate gel is conducted using zeolite beta seed crystals. In WO 2010/146156 A the organotemplate-free synthesis of zeolitic materials having the BEA-type framework structure, and in particular to the organotemplate-free synthesis of zeolite beta is described. In Majano et al., Chem. Mater. 2009, 21, pp. 4184-4191, on the other hand, Al-rich zeolite beta materials having Si/AI ratios as low as 3.9 are discussed which may be obtained from reactions employing seeding in the absence of organic templates. WO 2010/146156 A1 discloses a process for the organotemplate-free synthesis of zeolitic material having a BEA framework structure. WO 2011/146615 A2 discloses a template-free process for preparing a zeolitic material BEA comprising subjecting to ion-exchange the zeolitic material with copper and/or iron. Further, WO 2013/035077 A1 discloses an organotemplate-free synthetic process for the production of a zeolitic material comprising YO₂ and X₂O₃. Besides the considerable advantage of not having to use costly organotemplates which required subsequent removal from the microporous framework by calcination, the new organotemplate-free synthetic methodologies further allowed for the preparation of Al-rich zeolite beta with unprecedentedly low Si/AI ratios.

In this respect, both synthetic and natural zeolites and their use in promoting certain reactions, including the selective catalytic reduction of nitrogen oxides with ammonia in the presence of oxygen, are well known in the art. More specfically, the reduction of nitrogen oxides with ammonia to form nitrogen and H₂O can be catalyzed by metal-promoted zeolites to take place preferentially to the oxidation of ammonia by the oxygen or to the formation of undesirable side products such as N₂O, hence the process is often referred to as the "selective" catalytic reduction ("SCR") of nitrogen oxides. The catalysts employed in the SCR process ideally should be able to retain good catalytic activity over the wide range of temperature conditions of use, for example, 200°C to 600°C or higher, under hydrothermal conditions and in the presence of sulfur compounds. High temperature and hydrothermal conditions are often encountered in practice, such as during the regeneration of the catalyzed soot filter, a component necessary for the removal of soot particles in the exhaust gas treatment system.

Amongst others, iron- and copper-promoted zeolite catalysts are notably used for the selective catalytic reduction of nitrogen oxides with ammonia. Thus, as known from US 4,961,917, for example, iron-promoted zeolite beta is an effective commercial catalyst for the selective reduction of nitrogen oxides with ammonia. However, it has been found that under harsh hydrothermal conditions, for example exhibited during the regeneration of a catalyzed soot filter with temperatures locally exceeding 700 °C, the activity of many metal- promoted zeolites begins to decline. This decline is often attributed to dealumination of the zeolite and the subsequent loss of metal-containing active centers within the zeolite.

WO 2008/106519, on the other hand, discloses a catalyst comprising a zeolite having the CHA crystal structure and a molar ratio of silica to alumina greater than 15 and an atomic ratio of copper to aluminum exceeding 0.25. The catalyst is prepared via ion-exchange of copper into the NH₄⁺-form of the CHA-type zeolite with copper sulfate or copper acetate. These materials offer improvement in low temperature performance and hydrothermal stability in comparison to iron-promoted zeolite beta. However, Chabazite remains an expensive material due to the cost of the trimethyladamantylammonium hydroxide necessary for its synthesis.

Thus, there is an on-going task to provide cost-effective hydrothermally stable catalysts for SCR applications. Lower cost catalysts are desired which exhibit similar or improved SCR performance and stability compared to the state of the art SCR catalysts. In addition, the catalysts should show high activity over a wide temperature range, wherein especially the low temperatures activity around 200 °C is of utmost importance. Hydrothermal stability at temperatures of 750 °C, on the other hand, is equally desired for the reasons mentioned in the foregoing. In this respect, it must be noted that hydrothermal stability is dependent on the specific configuration of the catalyst system utilized in the exhaust treatment. Thus, although raising the amount of Fe or Cu in moles of Fe or Cu per 100 g zeolites provides a higher amount of catalytically active centres and thus a higher activity, high loadings on the other hand lead to poor aging stability resulting in a loss of surface area via deterioration of the zeolite framework during aging.

Thus, although notable progress has been made in the recent past with respect to the synthesis of new zeolitic materials having the BEA-type framework structure, there still remains a considerable need for the provision of new zeolitic materials having improved characteristics. This applies in particular in view of the numerous catalytic applications in which they are currently used, and notably in SCR.

### DETAILED DESCRIPTION

It is therefore the object of the present invention to provide an improved zeolitic material and in particular an improved zeolite catalyst. More specifically, the present invention aims at providing a zeolite catalyst displaying higher activities under prolonged conditions of use, in particular with respect to applications in selective catalytic reduction (SCR), i.e. for the conversion of nitrogen oxide with a reducing agent to environmentally inoffensive compounds such as in particular nitrogen and oxygen.

Thus, it has surprisingly been found that zeolitic materials supporting copper and/or iron, wherein said zeolitic materials have a BEA-type framework structure as obtained from organotemplate-free synthesis according to any one of claims 1 to 20 display an improved performance as a catalyst compared to conventional zeolitic materials having the BEA-type framework structure obtained from organotemplate-mediated synthesis, wherein this improved performance is particularly apparent in the selective catalytic reduction reaction. Even more surprisingly, it has been observed that zeolitic materials having a BEA-type framework structure obtainable from organotemplate-free synthetic procedures according to any one of claims 1 to 20 may not only display a higher catalytic activity at comparable loadings relative to the known catalysts from the prior art wherein the zeolitic material is obtained from templated synthesis, it has furthermore quite unexpectedly been found that said improved catalytic activity observed for the zeolitic materials obtainable from organotemplate-free synthesis may actually be improved towards higher loadings compared to the general decrease of catalytic activity towards higher loadings observed for the prior art materials. All the more surprisingly, said considerably improved catalytic performance is not only observed at particularly low temperatures, but is furthermore sustained even after severe conditions of use as may for example be simulated by hydrothermal ageing of the materials, in particular when compared to the known catalytic materials of the prior art.

Therefore, the present invention relates to a process for the production of a zeolitic material having a BEA-type framework structure comprising YO₂ and X₂O₃, wherein said process comprises the steps of
(1) preparing a mixture comprising one or more sources for YO₂, one or more sources for X₂O₃, and seed crystals comprising one or more zeolitic materials having a BEA-type framework structure;
(2) crystallizing the mixture obtained in step (1); and
(3) subjecting the zeolitic material having a BEA-type framework structure obtained in step (2) to an ion-exchange procedure with Cu and/or Fe,
wherein (3) comprises
(3a) exchanging one or more of the ionic non-framework elements contained in the zeolitic material having a BEA-type framework structure obtained in step (2) against H+ and/or NH₄+; and
(3b) calcining the zeolitic material having a BEA-type framework structure obtained in step (3a); and
(3c) exchanging one or more of the ionic non-framework elements contained in the zeolitic material having a BEA-type framework structure obtained in step (3b) against Cu and/or Fe;
wherein Y is a tetravalent element, and X is a trivalent element,
wherein the mixture provided in step (1) and crystallized in step (2) does not contain an organotemplate as structure-directing agent, and
wherein the total amount of Cu and/or Fe in the ion-exchanged material obtained in step (3) ranges from 3 to 25 wt.-% calculated as Fe₂O₃ and CuO, preferably from 3 to 20 wt.-%, more preferably from 3 to 15 wt.-%, more preferably from 3 to 10 wt.-%, more preferably from 3 to 8 wt.-%, more preferably from 3 to 7 wt.-%, more preferably from 3.5 to 6.5 wt.-%, more preferably from 4 to 6 wt.-%, and even more preferably from 4.5 to 5.5 wt.-%.

According to the present invention, there is no particular restriction as to the number and/or types of zeolitic materials which are obtained in step (2) of the inventive process, provided that they have the BEA framework structure and comprise YO₂ and X₂O₃. Thus, by way of example, the zeolitic material may comprise one or more zeolites having the BEA framework structure which are selected from the group consisting of zeolite beta, [B-Si-O]-BEA, [Ga-Si-O]-BEA, [Ti-Si-O]-BEA, Al-rich beta, CIT-6, tschernichite, and pure silica beta, wherein preferably the zeolitic material obtained in step (2) comprises zeolite beta, wherein even more preferably the zeolitic material having a BEA-type framework structure is zeolite beta.

According to the inventive process, at no point does the mixture provided in step (1) and crystallized in step (2) contain more than an impurity of an organic structure directing agent specifically used in the synthesis of zeolitic materials having a BEA-type framework structure, in particular specific tetraalkylammonium salts and/or related organotemplates such as tetraethylammonium and/or dibenzylmethylammonium salts, and dibenzyl-1,4-diazabicyclo[2,2,2]octane. Such an impurity can, for example, be caused by organic structure directing agents still present in seed crystals used in the inventive process. Organotemplates contained in seed crystal material may not, however, participate in the crystallization process since they are trapped within the seed crystal framework and therefore may not act structure directing agents within the meaning of the present invention.

Furthermore, YO₂ and X₂O₃ are comprised in the BEA-type framework structure as structure building elements, as opposed to non-framework elements which can be present in the pores and cavities formed by the framework structure and typical for zeolitic materials in general.

According to the present invention, a zeolitic material having a BEA-type framework structure is obtained in step (2). Said material comprises YO₂, wherein Y stands for any conceivable tetravalent element, Y standing for either one or several tetravalent elements. Preferred tetravalent elements according to the present invention include Si, Sn, Ti, Zr, and Ge, and combinations thereof. More preferably, Y stands for Si, Ti, or Zr, or any combination of said trivalent elements, even more preferably for Si and/or Sn. According to the present invention, it is particularly preferred that Y stands for Si.

Furthermore, according to the process of the present invention YO₂ can be provided in step (1) in any conceivable form, provided that a zeolitic material having a BEA-type framework structure comprising YO₂ can be crystallized in step (2). Preferably, YO₂ is provided as such and/or as a compound which comprises YO₂ as a chemical moiety and/or as a compound which (partly or entirely) is chemically transformed to YO₂ during the inventive process. In preferred embodiments of the present invention, wherein Y stands for Si or for a combination of Si with one or more further tetravalent elements, the source for SiO₂ provided in step (1) can be any conceivable source. There can therefore be used, for example, all types of silica and silicates, preferably fumed silica, silica hydrosols, reactive amorphous solid silicas, silica gel, silicic acid, water glass, sodium metasilicate hydrate, sesquisilicate or disilicate, colloidal silica, pyrogenic silica, silicic acid esters, tetraalkoxysilanes, or mixtures of two or more of these compounds.

In preferred embodiments of the inventive process, wherein the mixture according to step (1) comprises one or more sources for SiO₂, said source preferably comprises one or more compounds selected from the group consisting of silica and silicates, preferably silicates, more preferably alkali metal silicates. Among the preferred alkali metal silicates, the alkali metal is preferably selected from the group consisting of Li, Na, K, Rb, and Cs, wherein more preferably the alkali metal is Na and/or K, and wherein even more preferably the alkali metal is Na. Accordingly to particularly preferred embodiments, the one or more sources for SiO₂ preferably comprised in the mixture provided in step (1) comprises water glass, preferably sodium and/or potassium water glass, and even more preferably sodium water glass. According to said embodiments, it is yet further preferred that the one or more sources for SiO₂ comprises sodium and/or potassium silicate, and even more preferably sodium silicate, wherein in particularly preferred embodiments of the present invention, the source for SiO₂ is sodium silicate.

According to alternatively preferred embodiments of the present invention, the one or more sources for YO₂ comprise one or more further sources for YO₂ in addition to one or more silicates, and in particular one or more further sources for SiO₂ in addition thereto. In this respect there is no particular restriction as to the one or more additional sources for YO₂, and preferably for SiO₂, which may be used in addition to one or more silicates, provided that an organotemplate-free zeolitic material having a BEA-type framework structure may be crystallized in step (2). Thus, by way of example, the additional one or more sources for SiO₂ may include any one of silica, preferably fumed silica, silica hydrosols, reactive amorphous solid silicas, silica gel, silicic acid, colloidal silica, pyrogenic silica, silicic acid esters, tetraalkoxysilanes, or mixtures of two or more of these compounds. According to particularly preferred embodiments, the one or more additional sources for SiO₂ comprises one or more silicas. By way of example, the one or more silicas additionally used may include fumed silica, silica hydrosols, reactive amorphous solid silicas, silica gel, colloidal silica, pyrogenic silica, or mixtures of two or more of these compounds. It is, however, preferred according to the present invention that the one ore more silicas additionally used include one or more silica hydrosols and/or one or more colloidal silicas, and even more preferably one or more colloidal silicas.

Thus, embodiments of the present invention are preferred wherein the one or more sources for YO₂ provided in step (1) comprises one or more silicates, preferably one or more alkali metal silicates, wherein the alkali metal is preferably selected from the group consisting of Li, Na, K, Rb, and Cs, wherein more preferably the alkali metal is Na and/or K, and wherein even more preferably the alkali metal is Na. Furthermore, according to said particular and preferred embodiments, it is further preferred that the one or more sources for YO₂ further comprises one or more silicas in addition to the one or more silicates, preferably one or more silica hydrosols and/or one or more colloidal silicas, and even more preferably one or more colloidal silicas in addition to the one or more silicates. Alternatively or in addition thereto, it is further preferred according to the present invention that the one or more silicates provided in step (1) comprise water glass, preferably sodium and/or potassium silicate, and even more preferably sodium silicate.

Furthermore, as regards the zeolitic material having a BEA-type framework structure obtained in step (2) comprising X₂O₃, X may stand for any conceivable trivalent element, X standing for either one or several trivalent elements. Preferred trivalent elements according to the present invention include Al, B, In, and Ga, and combinations thereof. More preferably, Y stands for Al, B, or In, or any combination of said trivalent elements, even more preferably for Al and/or B. According to the present invention, it is particularly preferred that X stands for Al.

If, for example, boron is incorporated, for example free boric acid and/or borates and/or boric esters, such as, for example, triethyl borate or trimethyl borate, can be used as starting materials.

Concerning the one or more sources for X₂O₃ which are provided in step (1), there is no particular restriction as to the X₂O₃ can be provided in any conceivable form, provided that a zeolitic material having a BEA-type framework structure comprising X₂O₃ can be crystallized in step (2). Preferably, X₂O₃ is provided as such and/or as a compound which comprises X₂O₃ as a chemical moiety and/or as a compound which (partly or entirely) is chemically transformed to X₂O₃ during the inventive process.

In more preferred embodiments of the present invention, wherein X stands for Al or for a combination of Al with one or more further trivalent elements, the source for Al₂O₃ provided in step (1) can be any conceivable source. There can be used for example any type of alumina and aluminates, aluminum salts such as, for example, alkali metal aluminates, aluminum alcoholates, such as, for example, aluminum triisopropylate, or hydrated alumina such as, for example, alumina trihydrate, or mixtures thereof. Preferably, the source for Al₂O₃ comprises at least one compound selected from the group consisting of alumina and aluminates, preferably aluminates, more preferably alkali metal aluminates. Among the preferred alkali metal aluminates, the at least one source preferably comprises sodium and/or potassium aluminate, more preferably sodium aluminate. In particularly preferred embodiments of the present invention, the source for Al₂O₃ is sodium aluminate.

There is no particular restriction according to the present invention as to the amounts of the one or more sources for YO₂ and X₂O₃ respectively provided in step (1), provided that an organotemplate-free zeolitic material having a BEA-type framework structure comprising both YO₂ and X₂O₃ may be crystallized in step (2). Thus, by way of example, the YO₂: X₂O₃ molar ratio of the mixture according to step (1) may range anywhere from 1 to 200, wherein preferably the YO₂ : X₂O₃ molar ratio of the mixture ranges from 5 to 100, more preferably from 10 to 50, more preferably from 15 to 40, more preferably from 20 to 30, and even more preferably from 23 to 25. According to particularly preferred embodiments of the present invention, the YO₂: X₂O₃ molar ratio of the mixture provided in step (1) is comprised in the range of from 23.5 to 24.

In embodiments of the present invention which are further preferred, the zeolitic material obtained in step (2) of the inventive process comprises one or more alkali metals M, wherein M is preferably selected from the group consisting of Li, Na, K, Cs, and combinations of two or more thereof. According to particularly preferred embodiments, the one or more alkali metals M are selected from the group consisting of Li, Na, K, and combinations of two or more thereof, wherein even more preferably the alkali metal M is Na and/or K, and even more preferably Na. In particularly preferred embodiments of the inventive process, the alkali metal is partly or entirely contained in the at least one source for YO₂ and/or X₂O₃ provided in step (1), wherein preferably, the alkali metal is entirely contained therein.

In general, the alkali metal M can be contained in the mixture according to step (1) of the inventive process in any conceivable amount, provided that a zeolitic material having a BEA-type framework structure is crystallized in step (2). Thus, by way of example, the M : YO₂ molar ratio in the mixture provided in step (1) may range anywhere from 0.05 to 5, wherein preferably the mixture provided in step (1) and crystallized in step (2) displays a M : YO₂ molar ratio comprised in the range of from 0.1 to 2, more preferably or from 0.3 to 1, more preferably of from 0.4 to 0.8, more preferably of from 0.45 to 0.7, and even more preferably from 0.5 to 0.65. According to particularly preferred embodiments, the M : YO₂ molar ratio in the mixture according to step (1) ranges from 0.55 to 0.6

Thus, in general, any conceivable amounts of one or more sources for YO₂, of the one or more sources for X₂O₃, and of the one or more alkali metals M optionally comprised in the mixture provided in step (1) can be used in the inventive process, again provided that an organotmplate-free zeolitic material having a BEA-type framework structure may be crystallized in step (2). Thus, by way of example, the YO₂ : X₂O₃ : M molar ratios in the mixture according to step (1) may range anywhere from (1 to 200) : 1 : (0.5 to 100). It is, however, preferred according to the present invention that the YO₂ : X₂O₃ : M molar ratios displayed by the mixture provided in step (1) and crystallized in step (2) are comprised in the range of from (5 to 100) : 1 : (5 to 75), more preferably of from (10 to 50) : 1 : (8 to 50), more preferably of from (15 to 40) : 1 : (10 to 30), more preferably of from (20 to 30) : 1 : (11 to 20), and even more preferably of from (23 to 25) : 1 : (12 to 15). According to particularly preferred embodiments, the YO₂ : X₂O₃ : M molar ratio of the mixture provided in step (1) and crystallized in step (2) is comprised in the range of from (23.5 to 24) : 1 : (13 to 14).

According to the process of the present invention, seed crystals are provided in step (1), wherein said seed crystals comprise a zeolitic material having a BEA-type framework structure. In general, said seed crystals can comprise any zeolitic material having a BEA-type framework structure, provided that a zeolitic material having a BEA-type framework structure is crystallized in step (2). Preferably, the zeolitic material having a BEA-type framework structure comprised in the seed crystals is a zeolitic material obtained according to the inventive process. More preferably, the zeolitic material having a BEA-type framework structure comprised in the seed crystals is the same as the zeolitic material having a BEA-type framework structure which is then crystallized in step (2). Particularly preferred are seed crystals comprising zeolite beta, more preferably zeolite beta which has been obtained according to the inventive process. In particularly preferred embodiments, the seed crystals are zeolite beta crystals, preferably zeolite beta crystals obtained according to the inventive process.

According to the inventive process, any suitable amount of seed crystals can be provided in the mixture according to step (1), provided that a zeolitic material having a BEA-type framework structure is crystallized in step (2). In general, the amount of seed crystals contained in the mixture according to step (1) ranges from 0.1 to 30 wt.-% based on 100 wt.-% of YO₂ in the at least one source for YO₂, wherein preferably from 0.5 to 20 wt.-% of seed crystals are provided in the mixture crystallized in step (2). More preferably, the amount of seed crystals contained in the mixture according to step (1) ranges from 1 to 10 wt.-%, more preferably from 1.5 to 5 wt.-%, and even more preferably from 2 to 4 wt.-%. According to particularly preferred embodiments, the amount of seed crystals provided in the mixture according to step (1) ranges from 2.5 to 3.5 wt.-%

In step (1) according to the present invention, the mixture can be prepared by any conceivable means, wherein mixing by agitation is preferred, preferably by means of stirring.

According to the present invention, the mixture according to step (1) of the inventive process preferably further comprises one or more solvents. In this respect, any conceivable solvents may be used in any suitable amount, provided that a zeolitic material having a BEA-type framework structure comprising YO₂ and X₂O₃ can be obtained from crystallization in step (2). Thus, by way of example, the one or more solvents may be chosen from water, organic solvents, and mixtures thereof, preferably from the group consisting of deionized water, alcohols, and mixtures thereof. More preferably from the group consisting of deionized water, methanol, ethanol, propanol, and mixtures thereof. According to particularly preferred embodiments of the present invention, only water and preferably only deionized water is contained in the mixture according to step (1) as the solvent.

As regards the amount of the one or more solvents preferably provided in the mixture according to step (1) of the inventive process, again, no particular restriction applies provided that an organotemplate-free zeolitic material having a BEA-type framework structure comprising YO₂ and X₂O₃ may be crystallized in step (2). Thus, by way of example, according to particularly preferred embodiments of the present invention wherein the solvent comprises water, the H₂O : YO₂ molar ratio of the mixture may range anywhere from 5 to 100, wherein preferably, the H₂O : YO₂ molar ratio is comprised in the range of from 10 to 50, more preferably of from 13 to 30, and even more preferably of from 15 to 20. According to particularly preferred embodiments of the present invention, the H₂O : YO₂ molar ratio of the mixture provided in step (1) and crystallized in step (2) of the inventive process is comprised in the range of from 17 to 18.

In general, step (2) according to the inventive process can be conducted in any conceivable manner, provided that a zeolitic material having a BEA-type framework structure is crystallized from the mixture according to step (1). The mixture can be crystallized in any type of vessel, wherein a means of agitation is preferably employed, preferably by rotation of the vessel and/or stirring, and more preferably by stirring the mixture.

According to the inventive process, the mixture is preferably heated during at least a portion of the crystallization process in step (2). In general, the mixture can be heated to any conceivable temperature of crystallization, provided that a zeolitic material having a BEA-type framework structure is crystallized from the mixture. Preferably, the mixture is heated to a temperature of crystallization ranging from 80 to 200°C, more preferably from 90 to 180°C, more preferably from 100 to 160°C, more preferably from 110 to 140°C, and even more preferably from 115 to 130°C.

The preferred heating in step (2) of the inventive process can be conducted in any conceivable manner suitable for the crystallization of a zeolitic material having a BEA-type framework structure. In general, heating my be conducted at one temperature of crystallization or vary between different temperatures. Preferably, a heat ramp is used for reaching the temperature of crystallization, wherein the heating rate preferably ranges from 10 to 100°C/h, more preferably from 20 to 70°C/h, more preferably from 25 to 60°C/h, more preferably from 30 to 50°C/h, and even more preferably from 35 to 45°C/h.

In preferred embodiments of the present invention, the mixture according to step (1) is subjected in step (2) to a pressure which is elevated with regard to normal pressure. The term "normal pressure" as used in the context of the present invention relates to a pressure of 101,325 Pa in the ideal case. However, this pressure may vary within boundaries known to the person skilled in the art. By way of example, this pressure can be in the range of from 95,000 to 106,000 or of from 96,000 to 105,000 or of from 97,000 to 104,000 or of from 98,000 to 103,000 or of from 99,000 to 102,000 Pa.

In preferred embodiments of the inventive process wherein a solvent is present in the mixture according to step (1), it is furthermore preferred that heating in step (2) is conducted under solvothermal conditions, meaning that the mixture is crystallized under autogenous pressure of the solvent which is used, for example by conducting heating in an autoclave or other crystallization vessel suited for generating solvothermal conditions. In particularly preferred embodiments wherein the solvent comprises or consists of water, preferably of deionized water, heating in step (2) is accordingly preferably conducted under hydrothermal conditions.

The apparatus which can be used in the present invention for crystallization is not particularly restricted, provided that the desired parameters for the crystallization process can be realized, in particular with respect to the preferred embodiments requiring particular crystallization conditions. In the preferred embodiments conducted under solvothermal conditions, any type of autoclave or digestion vessel can be used.

In general, the duration of the crystallization process in step (2) of the inventive process is not particularly limited. In preferred embodiments involving heating of the mixture according to step (1), said crystallization process is conducted for a period ranging from 5 to 200h, more preferably from 20 to 160h, more preferably from 60 to 140h, and even more preferably from 100 to 130h.

According to preferred embodiments of the present invention, wherein the mixture is heated in step (2), said heating may be conducted during the entire crystallization process or during only one or more portions thereof, provided that a zeolitic material having the BEA-type framework structure is crystallized. Preferably, heating is conducted during the entire duration of crystallization.

In general, the process of the present invention can optionally comprise further steps for the work-up and/or further physical and/or chemical transformation of the zeolitic material having a BEA-type framework structure crystallized in step (2) from the mixture provided in step (1). The crystallized material can for example be subject to any number and sequence of isolation and/or washing and/or drying procedures, wherein the zeolitic material obtained from crystallization in step (2) is preferably subject to one or more isolation procedures, more preferably to one or more isolation and one or more washing procedures, and even more preferably to one or more isolation, one or more washing, and one or more drying procedures.

As regards preferred embodiments of the present invention wherein the organotemplate-free zeolitic material crystallized in step (2) is subject to one or more isolation procedures, said isolation of the crystallized product can be achieved by any conceivable means. Preferably, isolation of the crystallized product is achieved by means of filtration, ultrafiltration, diafiltration, centrifugation and/or decantation methods, wherein filtration methods can involve suction and/or pressure filtration steps.

With respect to the one or more optional washing procedures, any conceivable solvent can be used. Washing agents which may be used are, for example, water, alcohols, such as methanol, ethanol or propanol, or mixtures of two or more thereof. Examples of mixtures are mixtures of two or more alcohols, such as methanol and ethanol or methanol and propanol or ethanol and propanol or methanol and ethanol and propanol, or mixtures of water and at least one alcohol, such as water and methanol or water and ethanol or water and propanol or water and methanol and ethanol or water and methanol and propanol or water and ethanol and propanol or water and methanol and ethanol and propanol. Water or a mixture of water and at least one alcohol, preferably water and ethanol, is preferred, deionized water being very particularly preferred as the only washing agent.

Preferably, the separated zeolitic material is washed until the pH of the washing agent, preferably the washwater, is in the range of from 6 to 8, preferably from 6.5 to 7.5, as determined via a standard glass electrode.

Furthermore, as regards the one or more optional drying steps, in principle, any conceivable means of drying can be used. The drying procedures however preferably include heating and/or applying vacuum to the zeolitic material having a BEA-type framework structure. In alternatively preferred embodiments of the present invention, the one or more drying steps may involve spray drying, and preferably spray granulation of the zeolitic material crystallized in step (2) of the inventive process.

In embodiments which comprise at least one drying step, the drying temperatures are preferably in the range of from 25°C to 150°C, more preferably of from 60 to 140°C, more preferably of from 70 to 130°C and even more preferably in the range of from 75 to 125°C. The durations of drying are preferably in the range of from 2 to 60 h, more preferably in the range of 6 to 48 hours, and even more preferably of from 12 to 24 h.

In general, the optional washing and/or drying procedures comprised in the inventive process can be conducted in any conceivably order and repeated as often as desired.

Thus, according to the inventive process it is preferred that after step (2) and prior to step (3) said process further comprises one or more of the following steps of:
(i) isolating the zeolitic material having a BEA-type framework structure obtained in step (2), preferably by filtration; and
(ii) optionally washing the zeolitic material having a BEA-type framework structure obtained in step (2); and/or
(iii) optionally drying the zeolitic material having a BEA-type framework structure obtained in step (2);
wherein the steps (i) and/or (ii) and/or (iii) can be conducted in any order, and
wherein one or more of said steps is preferably repeated one or more times.

Preferably, the inventive process comprises at least one step (i) of isolating the zeolitic material crystallized according to step (2), more preferably by filtration thereof. According to the inventive process it is further preferred that after the at least one step (i) of isolation, the zeolitic material is subject to at least one step (iii) of drying, wherein more preferably the zeolitic material is subject to at least one step (ii) of washing prior to the at least one drying step. In a particularly preferred embodiment, the zeolitic material crystallized according to step (2) is subject to at least one step (i) of isolating, followed by at least one step (ii) of washing, followed by at least one step (iii) of drying.

According to a further embodiment of the inventive process which is alternatively preferred, the zeolitic material crystallized in step (2) is directly subject to one or more steps of drying, preferably to one or more steps of spray drying or of spray granulation, wherein it is particularly preferred that said one or more steps of spray drying or spray granulation are performed without isolating or washing the zeolitic material beforehand. Directly subjecting the mixture obtained from step (2) of the inventive process to a spray drying or spray granulation stage has the advantage that isolation and drying is performed in a single stage. Consequently, according to this embodiment of the present invention, an even more preferred process is provided wherein not only removal of organotemplate compounds is avoided, but also the number of post-synthesis workup steps is minimized, as a result of which the organotemplate-free zeolitic material having a BEA-type framework structure can be obtained from a highly simplified process.

According to the inventive process, the zeolitic material crystallized in step (2) is subject to one or more ion-exchange procedures, wherein the term "ion-exchange" according to the present invention generally refers to non-framework ionic elements and/or molecules contained in the zeolitic material. More specifically, according to the present invention the zeolitic material crystallized in step (2) is ion-exchanged with either copper or iron, or both copper and iron, wherein it is preferred that the zeolitic material crystallized in step (2) is ion-exchanged with either copper or iron.

As regards the ion-exchange procedure performed in step (3) of the inventive process, there is no particular restriction either regarding the specific impregnation method which is applied, nor with respect to whether said step is repeated and, if yes, the number of times said step is repeated. Thus, by way of example, ion-exchange may be conducted with the aid of a solvent or solvent mixture in which the ion to be exchanged is suitably dissolved. With respect to the type of solvent which may be used, there is again no particular restriction in this respect, provided that the ions to be exchanged, i.e. copper and/or iron and preferably copper or iron, may be solvated therein. Thus, by way of example, the solvent or mixture of solvents which may be used include water and alcohols, and in particular short chain alcohols selected among C₁-C₄, and preferably C₁-C₃ alcohols, in particular methanol, ethanol or propanol, including mixtures of two or more thereof. Examples of mixtures are mixtures of two or more alcohols, such as methanol and ethanol or methanol and propanol or ethanol and propanol or methanol and ethanol and propanol, or mixtures of water and at least one alcohol such as water and methanol or water and ethanol or water and propanol or water and methanol and ethanol or water and methanol and propanol or water and ethanol and propanol or water and methanol and ethanol and propanol. According to the present invention, however, water or a mixture of water and one or more alcohols is preferred, wherein a mixture of water and ethanol is further preferred, deionized water being particularly preferred as the solvent for the one or more ion-exchange procedures conducted in step (3).

As regards the amount of the one or more solvents preferably used in the ion-exchange procedure according to step (3), there is again no particular restriction according to the inventive process, provided that copper and/or iron may be effectively exchanged as non-framework elements in the zeolitic material obtained in step (2). Thus, by way of example, an excess of solvent or solvent mixture may be used in the ion-exchange procedure according to step (3) wherein solvated copper and/or iron may enter the porous system of the zeolitic material obtained in step (2) and, in counterpart, ions contained in the zeolitic material against which iron and/or copper is exchanged are suitably solvated in the solvent or solvent mixture and accordingly allowed to exit the porous system of the zeolitic material. Alternatively, however, ion-exchange may be achieved with a volume of solvent or a solvent mixture which slightly exceeds or approximately corresponds to or is slightly inferior to the porous volume of the zeolitic material such that copper and/or iron solvatized in the solvent or solvent mixture enters the porous system of the zeolitic material by capillary action according to an insipient wetness impregnation technique. In particular, according to specific embodiments of the present invention which employs said ion-exchange technique, the ion-exchange process directly takes place within the porous system of the zeolitic material obtained in step (2) without any ions necessarily leaving the zeolitic material via excess solvent. According to the present invention, however, it is preferred that the ion-exchange procedure in step (3) is conducted with an excess of solvent or solvent mixture, wherein, by way of example, a liquid to solid weight ratio ranging anywhere from 0.1 to 20 may be used. According to said preferred embodiments of the present invention, however, it is preferred that the liquid to solid weight ratio being the weight ratio of the solvent or solvent mixture to the zeolitic material obtained in step (2), is comprised in the range of from 1 to 15, more preferably of from 2 to 12, more preferably of from 3 to 10, more preferably of from 4 to 9, and even more preferably of from 5 to 8. According to particularly preferred embodiments of the present invention, the liquid to solid weight ratio employed in the ion-exchange procedure of step (3) is comprised in the range of from 6 to 7.

According to the present invention, the total amount of copper and/or iron which is ion-exchanged into the material obtained in step (3) is comprised in the range of from 3 to 25 wt.-% calculated as Fe₂O₃ and CuO, respectively. Consequently, the type of ion-exchange procedure employed in step (3) is suitably chosen, in particular also with respect to the type and/or amount of solvent or solvent mixture preferably used therein, and repeated one or more times if necessary for achieving a loading of copper and/or iron in the ion-exchanged material which is comprised by the aforementioned inventive range. According to the present invention it is however preferred that the total amount of copper and/or iron in the ion-exchanged material obtained in step (3) is comprised in the range of from 3 to 20 wt.-%, more preferably of from 3 to 15 wt.-%, more preferably of from 3 to 10 wt.-%, more preferably of from 3 to 8 wt.-%, more preferably of from 3 to 7 wt.-%, more preferably of from 3.5 to 6.5 wt.-%, and even more preferably of from 4 to 6 wt.-%. According to particularly preferred embodiments of the invention, the total amount of copper and/or iron is comprised in the range of from 4.5 to 5.5 wt.-%.

It is further preferred according to the present invention that the zeolitic material crystallized in step (2) is ion-exchanged in step (3) either with iron or with copper. According to said preferred embodiments of the present invention wherein the zeolitic material is ion-exchanged in step (3) with iron alone, there is no particular restriction as to the amount of iron in the ion-exchange material obtained in step (3) provided that the total amount thereof is comprised in the range of from 3 to 25 wt.-% calculated as Fe₂O₃. According to particularly preferred embodiments, however, the total amount of iron is comprised in the range of from 3 to 20 wt.-%, more preferably of from 3 to 15 wt.-%, more preferably of from 3 to 10 wt.-%, more preferably of from 3 to 7 wt.-%, and even more preferably of from 3.2 to 5.5. According to particularly preferred embodiments thereof, the total amount of iron which is ion-exchanged in step (3) is comprised in the range of from 3.3 to 5.4 wt.-% calculated as Fe₂O₃.

According to preferred embodiments of the present invention wherein the zeolitic material obtained from step (2) of the inventive process is ion-exchanged with copper alone in step (3), there is, again, no particular restriction as to the total amount of copper contained in the ion-exchange material provided that the total amount of copper is comprised in the range of from 3 to 25 wt.-% calculated as CuO. According to particularly preferred embodiments, however, the total amount of copper in the ion-exchange material obtained in step (3) is comprised in the range of from 3 to 20 wt.-%, more preferably of from 3 to 15 wt.-%, more preferably of from 3 to 10 wt.-%, more preferably of from 3 to 8 wt.-%, more preferably of from 4 to 6.5 wt.-%.

According to particularly preferred embodiments thereof, the total amount of copper in the ion-exchange material obtained in step (3) is comprised in the range of from 4.5 to 6 wt.-% calculated as CuO.

As discussed in the foregoing, the surprising technical effects of the present invention are particularly pronounced at high loadings of copper and/or iron in the zeolitic material obtained from step (3) of the inventive process. According to the present invention, the total amount of copper and/or iron in the ion-exchange material obtained in step (3) is comprised in the range of from 3 to 25 wt.-% calculated as Fe₂O₃ and CuO, respectively. Preferably, the total amount of copper and/or iron is comprised in the range of from 3.5 to 20 wt.-%, more preferably of from 4 to 15 wt.-%, more preferably of from 4.4 to 10 wt.-%, more preferably of from 4.6 to 9 wt.-%, more preferably of from 4.8 to 7 wt.-%, and even more preferably of from 5 to 6.5 wt.-%. According to yet further preferred embodiments thereof, the total amount of copper and/or iron in the ion-exchange material obtained in step (3) ranges from 5.2 to 6 wt.-% calculated as Fe₂O₃ and CuO, respectively.

Among the aforementioned particularly preferred embodiments displaying particularly high loadings of copper and/or iron, it is again preferred that the ion-exchange zeolitic material obtained in step (3) has been ion-exchanged with either copper or iron. According to those particularly preferred embodiments which have been ion-exchanged with copper alone, it is preferred that the total amount of copper in the ion-exchanged material calculated as CuO is comprised in the range of from 3.5 to 25 wt.-%, more preferably of from 4 to 20 wt.-%, more preferably of from 4.5 to 15 wt.-%, more preferably of from 5 to 12 wt.-%, more preferably of from 5.2 to 9 wt.-%, more preferably of from 5.4 to 7 wt.-%, more preferably of from 5.6 to 6.5 wt.-%. According to yet further embodiments thereof which are particularly preferred, the total amount of copper in the ion-exchanged material obtained in step (3) is comprised in the range of from 5.8 to 6 wt.-% based on CuO. On the other hand, according to alternative embodiments of the present invention which are particularly preferred, and wherein the zeolitic material has been ion-exchanged with iron alone in step (3) of the inventive process, the total amount of iron contained therein calculated as Fe₂O₃ is preferably comprised in the range of from 3 to 25 wt.-%, more preferably of from 3.5 to 20 wt.-%, more preferably of from 4 to 15 wt.-%, more preferably of from 4.4 to 10 wt.-%, more preferably of from 4.6 to 8 wt.-%, more preferably of from 4.8 to 6 wt.-%, more preferably of from 5 to 5.7 wt.-%. According to said particularly preferred embodiments it is yet further preferred that the total amount of iron in the ion-exchanged material obtained in step (3) calculated as Fe₂O₃ is comprised in the range of from 5.2 to 5.4 wt.-%.

As regards the one or more copper and iron compounds which may be used in the inventive process for ion-exchange in step (3), no particular restriction applies provided that the zeolitic material obtained in step (2) may be ion-exchanged therewith to afford an ion-exchanged zeolitic material wherein the total amount of copper and/or iron therein is comprised in the range of from 3 to 25 wt.-% calculated as Fe₂O₃ and CuO, respectively. Thus, as concerns the one or more iron compounds which may be employed in step (3) of the inventive process, any suitable iron compound or mixture of iron compounds may be used, wherein Fe²⁺ and/or Fe³⁺-ion containing compounds are preferably used, Fe²⁺-containing compounds being most preferably used. Furthermore, as concerns the one or more copper compounds which may be employed in step (3) of the inventive process, any suitable copper compound or mixture of copper compounds may be used, wherein Cu²⁺ and/or Cu⁺-ion containing compounds are preferably used, Cu²⁺-containing compounds being most preferably used. According to preferred embodiments of the present invention wherein a solvent or solvent mixture is employed in the ion-exchange step (3), the solubility of the one or more copper and/or iron compounds in the solvent or solvent mixture which is used is preferably such, that the concentration of copper and/or iron in the solvent or solvent mixture is suitable for obtaining a zeolitic material having a loading with copper and/or iron according to particular and/or preferred embodiments of the present invention, wherein it is preferred that said loading of the zeolitic material having a BEA-type framework structure as obtained from step (2) is achieved after five or less ion-exchange procedures when using such a solution, preferably after four or less, more preferably after three or less, more preferably after two or three, and even more preferably after only one ion-exchange procedure using such a solution.

Thus, by way of example, any suitable iron(II) and/or iron(III) compound, preferably any iron(II) compound, may be employed such as one or more iron(II) and/or iron(III) salts, and more preferably one or more iron(II) salts, selected from the group consisting of iron halides, preferably iron chloride and/or iron bromide, more preferably iron chloride, iron perchlorate, iron sulfite, iron sulfate, iron hydrogensulfate, iron nitrite, iron nitrate, iron dihydrogenphosphate, iron hydrogenphosphate, iron carbonate, iron hydrogencarbonate, iron acetate, iron citrate, iron malonate, iron oxalate, iron tartrate, and mixtures of two or more thereof. Preferably, the one or more iron compounds used for ion-exchange in step (3) of the inventive process is preferably selected from the group consisting of iron chloride and/or iron bromide, preferably iron chloride, iron perchlorate, iron sulfate, iron nitrate, iron acetate, and mixtures of two or more thereof, wherein preferably the one or more iron compound is an iron (II) compound. According to particularly preferred embodiments of the present invention, iron used for ion-exchange in step (3) of the inventive process comprises iron sulfate, preferably iron(II) sulfate, wherein even more preferably iron (II) sulfate is used as the iron compound in step (3).

As regards the copper compound which may be used for ion-exchange in step (3) of the inventive process, again, again any suitable copper(I) and/or copper(II) compound may be used, wherein preferably a copper(II) compound is used which is preferably a copper(II) salt. Thus, by way of example, one or more copper(II) salts may be used which are selected from the group consisting of copper(II) halides, preferably copper(II) chloride and/or copper(II) bromide, more preferably copper(II) chloride, copper(II) perchlorate, copper(II) sulfite, copper(II) hydrogensulfate, copper(II) sulfate, copper(II) nitrite, copper(II) nitrate, copper(II) dihydrogenphosphate, copper(II) hydrogenphosphate, copper(II) phosphate, copper(II) hydrogencarbonate, copper(II) carbonate, copper(II) acetate, copper(II) citrate, copper(II) malonate, copper(II) oxalate, copper(II) tartrate, and mixtures of two or more thereof, wherein more preferably the copper(II) salt is selected from the group consisting of copper(II) chloride and/or copper(II) bromide, preferably copper(II) chloride, copper(II) sulfate, copper(II) nitrate, copper(II) acetate, and mixtures of two or more thereof. According to particularly preferred embodiments of the present invention, copper used for ion-exchange in step (3) of the inventive process comprises copper(II) acetate, wherein more preferably the copper compound used for ion-exchange is copper(II) acetate.

As outlined in the forgoing, the ion-exchange step (3) may comprise one or more ion-exchange procedures. According to the present invention, the zeolitic material obtained in step (2) of the inventive process is first ion-exchanged with H⁺ and/or ammonium, preferably with H⁺, prior to one or more ion-exchange procedures with copper and/or iron (3a). According to the present invention, the zeolitic material obtained in step (3a) of the inventive process is subject to a step of calcination prior to ion-exchange with copper and/or iron in step (3c). According to the present invention, the zeolitic material obtained in step (3a) is calcined, said calcination may be conducted at any suitable temperature for any conceivable duration provided that the resulting material may be ion-exchanged with copper and/or iron for obtaining an ion-exchanged material wherein the loading with copper and/or iron is comprised in the range of from 3 to 25 wt.-% calculated as Fe₂O₃ and CuO, respectively. Thus, by way of example, the calcination temperature may range anywhere from 250 to 700 °C, wherein the calcination temperature is preferably comprised in the range of from 300 to 600 °C, more preferably of from 350 to 550 °C, and even more preferably of from 400 to 500 °C. According to the present invention including a calcination step prior to ion-exchange, the zeolitic material obtained in step (3a) preferably is calcined at a temperature comprised in the range of from 430 to 470 °C prior to ion-exchange with copper and/or iron. Furthermore, as regards the duration of the calcination procedure optionally used prior to ion-exchange in step (3c), the calcination may be conducted for a period ranging anywhere from 0.5 to 24 h, wherein preferably the duration of the calcination ranges from 1 to 18 h, more preferably from 2 to 12 h, more preferably from 3 to 10 h, and even more preferably from 3.5 to 8 h. According to particularly preferred embodiments, the calcination procedure performed to ion-exchange with copper and/or iron is performed for a duration of from 4 to 6 hours.

Thus, according to the present invention, the zeolitic material obtained in step (2) of the inventive process is ion-exchanged with H⁺ and/or NH₄⁺, preferably with H⁺, according to (3a) and calcined according to (3b) prior to ion-exchange with copper and/or iron in step (3c). According to preferred embodiments of the present invention, the zeolitic material obtained in step (2) is first ion-exchanged with H⁺ prior to ion-exchange with copper and/or iron in step (3). In this respect, any conceivable ion-exchange procedure such as for example the treatment of the zeolitic material with an acid such as with an acidic medium and in particular with an acidic solution may be employed for achieving the exchange of ionic non-framework elements contained in the zeolitic material obtained in step (2) against H⁺. According to the present invention it is however particularly preferred that said ion-exchange of non-framework elements against H⁺ is achieved by first ion-exchanging one or more of the ionic non-framework elements contained in the zeolitic material against ammonium such as by means of contacting the zeolitic material with ammonium-containing solution, after which the zeolitic material which has been ion-exchanged with ammonium is calcined. According to said particularly preferred embodiments, the ammonium exchange procedure followed by the calcination procedure is repeated one or more times, and preferably repeated twice, thus affording the H-form of the zeolitic material obtained in step (2) of the inventive process.

Thus, as mentioned above, it has surprisingly been found that a zeolitic material may be provided according to the inventive process displaying unexpected and improved properties, in particular with respect to the catalytic activity thereof. More specifically, it has surprisingly been found that according to the inventive process a zeolitic material having a BEA-type framework structure which is ion-exchanged with copper and/or iron may be provided which displays an unexpectedly high activity in selective catalytic reduction applications, in particular at high loadings of Cu and/or Fe.

Therefore, the present invention also relates to a zeolitic material having a BEA-type framework structure which is obtainable and/or obtained according to particular and preferred embodiments of the inventive process as defined in the present application. Within the meaning of the present invention, the term "obtainable" refers to any zeolitic material having a BEA-type framework structure which is either obtained by the process according to the present invention or by any conceivable process which leads to a zeolitic material having a BEA-type framework structure as is obtainable according to the inventive process. The present invention relates to a zeolitic material according to any one of claims 21 to 26.

According to the present invention, said zeolitic material having a BEA-type framework structure has an X-ray diffraction pattern comprising at least the following reflections:

| Intensity (%) | Diffraction angle 2θ/° [Cu K(alpha 1)] |
|---|---|
| [11 - 31] | [21.07 - 21.27] |
| 100 | [22.12 - 22.32] |
| [13 - 33] | [25.01 - 25.21] |
| [17 - 37] | [25.53 - 25.73] |
| [13 - 33] | [26.78 - 26.98] |
| [11 - 31] | [28.39 - 28.59] |
| [22 - 42] | [29.24 - 29.44] |
| [6 - 26] | [30.00 - 30.20] |
| [9 - 29] | [32.86 - 33.26] |
| [11 - 31] | [42.90 - 43.30] |

wherein 100 % relates to the intensity of the maximum peak in the X-ray powder diffraction pattern,
wherein the BEA-type framework structure comprises YO₂ and X₂O₃,
wherein Y is a tetravalent element, and X is a trivalent element, and
wherein the zeolitic material comprises Cu and/or Fe as non-framework elements in a loading ranging from 3 to 25 wt.-% calculated as Fe₂O₃ and CuO, preferably from 3 to 20 wt.-%, more preferably from 3 to 15 wt.-%, more preferably from 3 to 10 wt.-%, more preferably from 3 to 8 wt.-%, more preferably from 3 to 7 wt.-%, more preferably from 3.5 to 6.5 wt.-%, more preferably from 4 to 6 wt.-%, and even more preferably from 4.5 to 5.5 wt.-%.

Preferably, the zeolitic material having a BEA-type framework structure according to the present invention has an X-ray diffraction pattern comprising at least the following reflections:

| Intensity (%) | Diffraction angle 2θ/° [Cu K(alpha 1)] |
|---|---|
| [11 - 31] | [21.12 - 21.22] |
| 100 | [22.17 - 22.27] |
| [13 - 33] | [25.06 - 25.16] |
| [17 - 37] | [25.58 - 25.68] |
| [13 - 33] | [26.83 - 26.93] |
| [11 - 31] | [28.44 - 28.54] |
| [22 - 42] | [29.29 - 29.39] |
| [6 - 26] | [30.05 - 30.15] |
| [9 - 29] | [33.01 - 33.11] |
| [11 - 31] | [43.05 - 43.15] |

wherein 100 % relates to the intensity of the maximum peak in the X-ray diffraction.

Preferably, the inventive zeolitic material having a BEA-type framework structure displaying a powder diffraction pattern according to the present invention is a zeolitic material which is either obtained by the process according to the present invention or by any conceivable process which leads to a zeolitic material having a BEA-type framework structure as may be obtained, i.e. as is obtainable according to the inventive process.

According to the present invention, in the zeolitic material having a BEA-type framework structure, Y stands for any conceivable tetravalent element, Y standing for either one or several tetravalent elements. Preferred tetravalent elements according to the present invention include Si, Sn, Ti, Zr, and Ge, and combinations thereof. More preferably, Y stands for Si, Ti, or Zr, or any combination of said trivalent elements, even more preferably for Si and/or Sn. According to the present invention, it is particularly preferred that Y stands for Si.

Furthermore, as regards X₂O₃ further comprised in the framework of the zeolitic material having a BEA structure further, X may stand for any conceivable trivalent element, X standing for either one or several trivalent elements. Preferred trivalent elements according to the present invention include Al, B, In, and Ga, and combinations thereof. More preferably, Y stands for Al, B, or In, or any combination of said trivalent elements, even more preferably for Al and/or B. According to the present invention, it is particularly preferred that X stands for Al.

According to the present invention, there is no particular restriction as to the YO₂ : X₂O₃ molar ratio displayed by the inventive zeolitic material having a BEA-type framework structure. Thus, in principle, the inventive zeolitic material may have any conceivable YO₂ : X₂O₃ molar ratio. Accordingly, by way of example, the zeolitic material having a BEA-type framework structure may have an YO₂ : X₂O₃ molar ratio comprised in the range of anywhere from 2 to 100, wherein preferably, the YO₂ : X₂O₃ molar ratio is comprised in the range of from 4 to 70, more preferably from 5 to 50, more preferably from 6 to 30, more preferably from 7 to 20, more preferably from 8 to 15, and even more preferably from 9 to 13. According to particularly preferred embodiments, the inventive zeolitic material having a BEA-type framework structure has a YO₂ : X₂O₃ molar ratio comprised in the range of from 10 to 11.

Regarding copper and/or iron comprised as non-framework elements in the inventive zeolitic material having a BEA-type framework structure, the present invention includes embodiments wherein both copper and iron are contained as non-framework elements in the zeolitic material, as well a embodiments wherein substantially either copper or iron alone is comprised therein as non-framework element. Within the meaning of the present invention, the term "substantially" as employed with respect to the zeolitic material only containing either copper or iron as non-framework element indicates that the other element is not contained in any substantial amount in the zeolitic material among the non-framework elements. Thus, preferred embodiments of the present invention substantially only comprising copper as non-framework element in the zeolitic material having a BEA-type framework structure indicates that any iron contained in said material as non-framework element is contained therein in an amount of 0.1 wt.-% or less based on 100 wt.-% of YO₂ contained in the framework of the zeolitic material, wherein preferably, the zeolitic material according to said embodiments contains 0.05 wt.-% or less of iron as non-framework element based on 100 wt.-% of YO₂, more preferably 0.001 wt.-% or less, more preferably 0.0005 wt.-% or less, and even more preferably 0.0001 wt.-% or less thereof. Thus, if at all present in the zeolitic material, such amounts of iron in said particularly preferred embodiments of the inventive zeolitic material only comprising copper as non-framework element may also be denoted as "impurities" or "trace amounts" of iron within the meaning of the present invention. Same applies accordingly with respect to alternatively preferred embodiments only comprising iron as non-framework element in the zeolitic material having a BEA-type framework structure. Thus, more specifically preferred embodiments of the present invention substantially only comprising iron as non-framework element in the zeolitic material having a BEA-type framework structure indicates that any copper contained in said material as non-framework element is contained therein in an amount of 0.1 wt.-% or less based on 100 wt.-% of YO₂ contained in the framework of the zeolitic material, wherein preferably, the zeolitic material according to said embodiments contains 0.05 wt.-% or less of copper as non-framework element based on 100 wt.-% of YO₂, more preferably 0.001 wt.-% or less, more preferably 0.0005 wt.-% or less, and even more preferably 0.0001 wt.-% or less thereof. Thus, again, if at all present in the zeolitic material, such amounts of copper in said particularly preferred embodiments of the inventive zeolitic material only comprising iron as non-framework element may accordingly also be denoted as "impurities" or "trace amounts" of copper within the meaning of the present invention.

Therefore, according to the present invention, it is preferred that only iron or copper is comprised in the zeolitic material having a BEA-type framework structure.

Regarding particular and preferred embodiments of the present invention wherein the zeolitic material having a BEA-type framework structure contains iron as a non-framework element, as well as with respect to particularly preferred embodiments wherein the zeolitic material only comprises iron as non-framework element, there is no particular restriction as to the Fe : X₂O₃ molar ratio of the zeolitic material, provided that the total loading of iron and copper as non-framework elements calculated as Fe₂O₃ and CuO is comprised in the range of from 3 to 25 wt.-%. Thus, by way of example, the Fe : X₂O₃ molar ratio of the zeolitic material may range anywhere from 0.005 to 2, wherein preferably the Fe : X₂O₃ molar ratio is comprised in the range of from 0.01 to 1, more preferably of from 0.05 to 0.7, more preferably of from 0.09 to 0.5, more preferably of from 0.11 to 0.4, more preferably of from 0.13 to 0.35, and even more preferably of from 0.15 to 0.3. According to particularly preferred embodiments of the present invention, the Fe : X₂O₃ molar ratio of the zeolitic material ranges from 0.16 to 0.26.

Alternatively, concerning particular and preferred embodiments of the present invention wherein the zeolitic material having a BEA-type framework structure contains copper as a non-framework element, as well as with respect to particularly preferred embodiments wherein the zeolitic material only comprises copper as non-framework element, there is again no particular restriction as to the Cu : X₂O₃ molar ratio of the zeolitic material, provided that the total loading of copper and iron as non-framework elements respectively calculated as Fe₂O₃ and CuO is comprised in the range of from 3 to 25 wt.-%. Thus, by way of example, the Cu : X₂O₃ molar ratio of the zeolitic material may range anywhere from 0.005 to 2, wherein preferably the Cu : X₂O₃ molar ratio is comprised in the range of from 0.01 to 1, more preferably of from 0.05 to 0.7, more preferably of from 0.1 to 0.5, more preferably of from 0.15 to 0.4, more preferably of from 0.18 to 0.35, and even more preferably of from 0.2 to 0.3. According to particularly preferred embodiments of the present invention, the Cu : X₂O₃ molar ratio of the zeolitic material ranges from 0.22 to 0.28.

Depending on the specific needs of its application, the inventive material according to particular and preferred embodiments of the present application can be employed as such, like in the form of a powder, a spray powder or a spray granulate obtained from above-described separation techniques, e.g. decantation, filtration, centrifugation, or spraying.

In many industrial applications, it is often desired on the part of the user not to employ the zeolitic material as powder or sprayed material, i.e. the zeolitic material obtained by the separation of the material from its mother liquor, optionally including washing and drying, and subsequent calcination, but a zeolitic material which is further processed to give moldings. Such moldings are required particularly in many industrial processes, e.g. in many processes wherein the zeolitic material of the present invention is employed as catalyst or adsorbent.

Accordingly, the present invention also relates to a molding comprising the zeolitic material of the present invention having a BEA-type framework structure.

In general, the powder or sprayed material can be shaped without any other compounds, e.g. by suitable compacting, to obtain moldings of a desired geometry, e.g. tablets, cylinders, spheres, or the like.

Preferably, the powder or sprayed material is admixed with or coated by a suitable refractory binder. In general, suitable binders are all compounds which impart adhesion and/or cohesion between the zeolitic material particles to be bonded which goes beyond the physisorption which may be present without a binder. Examples of such binders are metal oxides, such as, for example, SiO₂, Al₂O₃, TiO₂, ZrO₂ or MgO or clays, or mixtures of two or more of these compounds. Naturally occurring clays which can be employed include the montmorillonite and kaolin family, which families include the subbentonites, and the kaolins commonly known as Dixie, McNamee, Georgia and Florida clays or others in which the main mineral constituent is halloysite, kaolinite, dickite, nacrite, or anauxite. Such clays can be used in the raw state as originally mined or initially subjected to calcination, acid treatment or chemical modification. In addition, the zeolitic material according to the present invention can be composited with a porous matrix material such as silica-alumina, silica-magnesia, silica-zirconia, silica-thoria, silica-beryllia and silica-titania as well as ternary compositions such as silica-alumina-thoria, silica-alumina-zirconia, silica-alumina-magnesia and silica-magnesia-zirconia.

Also preferably, the powder or the sprayed material, optionally after admixing or coating by a suitable refractory binder as described above, is formed into a slurry, for example with water, which is deposited upon a suitable refractory carrier. The slurry may also comprise other compounds such as, e.g., stabilizers, defoamers, promotors, or the like. Typically, the carrier comprises a member, often referred to as a "honeycomb" carrier, comprising one or more refractory bodies having a plurality of fine, parallel gas flow passages extending therethrough. Such carriers are well known in the art and may be made of any suitable material such as cordierite or the like.

In general, the zeolitic material according to any of the particular and preferred embodiments as described in the present application can be used as molecular sieve, adsorbent, catalyst, catalyst support or binder thereof. Especially preferred is the use as catalyst. For example, the zeolitic material can be used as molecular sieve to dry gases or liquids, for selective molecular separation, e.g. for the separation of hydrocarbons or amides; as ion exchanger; as chemical carrier; as adsorbent, in particular as adsorbent for the separation of hydrocarbons or amides; or as a catalyst. Most preferably, the zeolitic material according to the present invention is used as a catalyst.

According to a preferred embodiment of the present invention, the zeolitic material according to any of the particular and preferred embodiments as described in the present application is used in a catalytic process, preferably as a catalyst and/or catalyst support, and more preferably as a catalyst. In general, the zeolitic material of the invention can be used as a catalyst and/or catalyst support in any conceivable catalytic process, wherein processes involving the conversion of at least one organic compound is preferred, more preferably of organic compounds comprising at least one carbon - carbon and/or carbon - oxygen and/or carbon - nitrogen bond, more preferably of organic compounds comprising at least one carbon - carbon and/or carbon - oxygen bond, and even more preferably of organic compounds comprising at least one carbon - carbon bond. In particularly preferred embodiments of the present invention, the zeolitic material is used as a catalyst and/or catalyst support in a fluid catalytic cracking (FCC) process. According to a further embodiment of the present invention, the zeolitic material of the invention is preferably used in a catalytic process involving the conversion of at least one compound comprising at least one nitrogen - oxygen bond.

Thus, according to the present invention, the zeolitic material having a BEA-type framework structure is preferably used for the oxidation of NH₃, in particular for the oxidation of NH₃ slip in diesel systems; for the decomposition of N₂O; for soot oxidation; for emission control in Advanced Emission Systems such as Homogeneous Charge Compression Ignition (HCCI) engines; as additive in fluid catalytic cracking (FCC) processes; as catalyst in organic conversion reactions; or as catalyst in "stationary source" processes. Therefore, the present invention also relates to a method of oxidizing NH₃, in particular of oxidizing NH₃ slip in diesel systems, by contacting a stream containing NH₃ with a catalyst containing the zeolitic material having a BEA-type framework structure according to the present invention under suitable oxidizing conditions; to a method of decomposing of N₂O by contacting a stream containing N₂O with a catalyst containing the zeolitic material having a BEA-type framework structure according to the present invention under suitable decomposition conditions; to a method of controlling emissions in Advanced Emission Systems such as Homogeneous Charge Compression Ignition (HCCI) engines by contacting an emission stream with a catalyst containing the zeolitic material having a BEA-type framework structure according to the present invention under suitable conditions; to a fluid catalytic cracking FCC process wherein the zeolitic material having a BEA-type framework structure according to the present invention is employed as additive; to a method of converting an organic compound by contacting said compound with a catalyst containing the zeolitic material having a BEA-type framework structure according to the present invention under suitable conversion conditions; to a "stationary source" process wherein a catalyst is employed containing the zeolitic material having a BEA-type framework structure according to the present invention.

According to a particularly preferred embodiment of the present invention, however, the zeolitic material according to any of the particular and preferred embodiments as described in the present application is used as a catalyst and/or catalyst support, preferably as a catalyst in a selective catalytic reduction (SCR) process for the selective reduction of nitrogen oxides NOₓ.

Consequently, the present invention also relates to the use of a zeolitic material according to the present invention, the use being according to claim 31. The present invention also relates to the use of a zeolitic material according to any of the particular and preferred embodiments as described in the present application in a catalytic process, preferably as a catalyst, more preferably in selective catalytic reduction (SCR), wherein the zeolitic material is preferably used in the treatment of industrial or automotive exhaust gas, preferably in the treatment of automotive exhaust gas.

Accordingly, the present invention also relates to a method for selectively reducing nitrogen oxides NOₓ by contacting a gas stream containing NOₓ with a catalyst containing the zeolitic material having a BEA-type framework structure according to any of the particular and preferred embodiments as described in the present application, in particular under suitable reducing conditions. Within the meaning of the present invention, the terms "nitrogen oxides" and "NOₓ" designate nitrogen monoxide (NO), nitrogen dioxide (NO₂), and/or mixtures thereof, and preferably designate a mixture of NO and NO₂.

Therefore, the present invention further relates to a method for the treatment of NOx according to any one of claims 27 to 30. The present invention further relates to a method for the treatment of NOₓ by selective catalytic reduction (SCR) comprising:
(a) providing a catalyst comprising a zeolitic material having a BEA-type framework structure according to any of the particular and preferred embodiments as described in the present application; and
(b) contacting a gas stream comprising NOₓ with the catalyst provided in step (a).

According to the use of the inventive catalyst and/or to the inventive method for the treatment of NOₓ, there is no particular restriction as to the way or form in which the inventive catalyst is used or in which the inventive catalyst is provided in step (a) of the inventive method, provided that is may be used as a catalyst and, more specifically, provided that it is suited for the treatment of NOₓ by SCR in the inventive method. Thus, by way of example, when preparing specific catalytic compositions or compositions for different purposes, it is conceivable to blend the zeolitic material according to the present invention having a BEA-type framework structure with at least one other catalytically active material or a material being active with respect to the intended purpose. It is also possible to blend at least two different inventive materials which may differ in the YO₂ : X₂O₃ ratio, preferably in the SiO₂ : Al₂O₃ ratio, and/or in the presence or absence of a further metal such as a transition metal and/or in the specific amounts of a further metal such as a transition metal, in addition to iron and/or copper contained in the inventive zeolitic material, more preferably in addition to either iron or copper contained in the inventive zeolitic material. It is also possible to blend at least two different inventive materials with at least one other catalytically active material or a material being active with respect to the intended purpose.

The catalysts of the present invention may also be provided in the form of extrudates, pellets, tablets or particles of any other suitable shape, for use as a packed bed of particulate catalyst, or as shaped pieces such as plates, saddles, tubes, or the like.

Also, the catalyst may be disposed on a substrate. The substrate may be any of those materials typically used for preparing catalysts, and will usually comprise a ceramic or metal honeycomb structure. Any suitable substrate may be employed, such as a monolithic substrate of the type having fine, parallel gas flow passages extending therethrough from an inlet or an outlet face of the substrate, such that passages are open to fluid flow therethrough (referred to as honeycomb flow through substrates). The passages, which are essentially straight paths from their fluid inlet to their fluid outlet, are defined by walls on which the catalytic material is disposed as a washcoat so that the gases flowing through the passages contact the catalytic material. The flow passages of the monolithic substrate are thin-walled channels, which can be of any suitable cross-sectional shape and size such as trapezoidal, rectangular, square, sinusoidal, hexagonal, oval, circular, etc. Such structures may contain from about 60 to about 400 or more gas inlet openings (i.e., cells) per square inch (2.54 cm x 2.54 cm) of cross section.

The substrate can also be a wall-flow filter substrate, where the channels are alternately blocked, allowing a gaseous stream entering the channels from one direction (inlet direction), to flow through the channel walls and exit from the channels from the other direction (outlet direction). The catalyst composition can be coated on the flow through or wall-flow filter. If a wall flow substrate is utilized, the resulting system will be able to remove particulate matter along with gaseous pollutants. The wall-flow filter substrate can be made from materials commonly known in the art, such as cordierite, aluminum titanate or silicon carbide. It will be understood that the loading of the catalytic composition on a wall flow substrate will depend on substrate properties such as porosity and wall thickness, and typically will be lower than loading on a flow through substrate.

The ceramic substrate may be made of any suitable refractory material, e.g., cordierite, cordierite-alumina, silicon nitride, zircon mullite, spodumene, alumina-silica magnesia, zircon silicate, sillimanite, a magnesium silicate, zircon, petalite, alpha-alumina, an aluminosilicate, and the like.

The substrates useful for the catalysts of embodiments of the present invention may also be metallic in nature and be composed of one or more metals or metal alloys. The metallic substrates may be employed in various shapes such as corrugated sheet or monolithic form. Suitable metallic supports include the heat resistant metals and metal alloys such as titanium and stainless steel as well as other alloys in which iron is a substantial or major component. Such alloys may contain one or more of nickel, chromium and/or aluminum, and the total amount of these metals may advantageously comprise at least 15 wt. % of the alloy, e.g., 10-25 wt. % of chromium, 3-8 wt. % of aluminum and up to 20 wt. % of nickel. The alloys may also contain small or trace amounts of one or more other metals such as manganese, copper, vanadium, titanium, and the like. The surface or the metal substrates may be oxidized at high temperatures, e.g., 1000 °C and higher, to improve the resistance to corrosion of the alloys by forming an oxide layer on the surfaces of the substrates. Such high temperature-induced oxidation may enhance the adherence of the refractory metal oxide support and catalytically promoting metal components to the substrate.

In alternative embodiments, zeolitic material according to the present invention having a BEA-type framework structure may be deposited on an open cell foam substrate. Such substrates are well known in the art, and are typically formed of refractory ceramic or metallic materials.

Most preferably, the zeolitic material according to any of the particular and preferred embodiments as described in the present application is used as a molded catalyst, still more preferably as a molded catalyst wherein the zeolitic material is deposited on a suitable refractory carrier, still more preferably on a "honeycomb" carrier, for the selective reduction of nitrogen oxides NOₓ according to the preferred use of the inventive material or as the catalyst comprising a zeolitic material according to step (a) of the inventive method for the treatment of NOₓ by selective catalytic reduction.

As regards the contacting of the gas stream with the catalyst comprising a zeolitic material having a BEA-type framework structure according to particular and preferred embodiments as described in the present application, there is no particular restriction as to the mode or the conditions in which said contacting takes place, provided that it is suited for engaging the SCR reaction between the catalyst and the gas stream containing NOₓ in step (b) of the inventive method. According to preferred embodiments of the present invention, the contacting takes place at an elevated temperature compared to ambient temperature, more preferably at a temperature comprised in the range of anywhere from 150 to 700°C, wherein the temperature of contacting is more preferably comprised in the range of from 200 to 650°C, more preferably of from 250 to 600°C, more preferably of from 300 to 550°C, more preferably of from 350 to 525°C, and even more preferably of from 400 to 500°C. According to particularly preferred embodiments of the inventive method, the temperature of contacting in step (b) is comprised in the range of from 425 to 475°C.

According to alternative embodiments of the inventive method which are particularly preferred however, the contacting at least partly takes place under so-called "cold-start" conditions as are, for example, typically encountered in the treatment of automotive exhaust gas. In particular, within the meaning of the present invention, the contacting of a gas stream comprising NOₓ under "cold-start" conditions implies that said contacting takes place at lower temperatures than required for the optimal activity of the inventive catalyst according to any of the particular and preferred embodiments described in the present application which is used for SCR in the inventive method. According to the present invention, it is however preferred that "cold-start" conditions refer to the conditions and in particular to the temperature typically encountered in automotive applications during the first phase directly following the ignition of the combustion engine, and in particular when the combustion engine has not been in operation for a certain period, such that the temperature of the exhaust gas upon contact with the catalyst and/or the temperature of the catalyst itself which is employed in the inventive method is and/or are below the temperature required for optimal activity of the catalyst. Within the meaning of the present invention, the "temperature of optimal activity of the catalyst" refers in particular to the lowest temperature at which the catalyst, depending on the particular composition and temperature of the gas stream contacting the catalyst in the inventive method as well as the further parameters including the pressure and time of contact of the gas stream containing NOₓ with the catalyst, displays the maximum activity with respect to the treatment of NOₓ in the SCR process.

Thus, in general, according to said particularly preferred embodiments of the inventive method, the temperature of "cold-start" conditions is any temperature below the temperature of optimal activity of the catalyst employed in the inventive method, wherein preferably the temperature is comprised in the range of from 50 to 500°C below the temperature of optimal catalyst activity, more preferably of from 100 to 400°C below, more preferably 150 to 350°C below, more preferably 200 to 300°C below, and even more preferably or from 225 to 275°C below the temperature of optimal activity of the catalyst employed in the inventive method. Therefore, according to an alternative embodiment of the inventive method which is particularly preferred, depending on the specific catalyst according to particular and preferred embodiments of the present invention which is used in the inventive method, as well as on the specific composition of the gas stream comprising NOₓ and the conditions of contacting used therein, the temperature of contacting in step (b) is comprised in the range of from 50 to 500°C, wherein preferably the temperature of contacting is comprised in the range of from 90 to 400°C, more preferably of from 120 to 300°C, more preferably of from 150 to 250°C, and even more preferably of from 180 to 220°C.

Concerning the gas stream comprising NOₓ which is contacted with the catalyst in step (b) of the inventive method, there is no particular restriction as to the further component which may be contained therein, provided that the treatment of NOₓ by SCR in step (b) is possible. According to preferred embodiments of the present invention, the gas stream further comprises one or more reducing agents, and more preferably one or more reducing agents which are active in the SCR process when simultaneously contacted with both the catalyst and NOₓ contained in the gas stream. In general, any suitable reducing agent may be employed, wherein it is preferred that the reducing agent comprises urea and/or ammonia. In particular, the selective reduction of nitrogen oxides wherein the zeolitic material according to the inventive method is employed as catalytically active material is preferably carried out in the presence ammonia or urea. While ammonia is the reducing agent of choice for stationary power plants, urea is the reducing agent of choice for mobile SCR systems. Typically, the SCR system is integrated in the engine and vehicle design and, also typically, contains the following main components: SCR catalyst containing the zeolitic material according to the present invention; a urea storage tank; a urea pump; a urea dosing system; a urea injector/nozzle; and a respective control unit.

Thus, according to preferred embodiments of the inventive method, the gas stream further comprises one or more reducing agents, the one or more reducing agents preferably comprising urea and/or ammonia, preferably ammonia.

Therefore, the present invention also relates to a method for selectively reducing nitrogen oxides NOₓ in a selective catalytic reduction (SCR) process, wherein a gaseous stream containing nitrogen oxides NOₓ, preferably further comprising one or more reducing agents, is contacted with the zeolitic material according to any of the particular and preferred embodiments as described in the present application, preferably in the form of a molded catalyst, still more preferably as a molded catalyst wherein the zeolitic material is deposited on a suitable refractory carrier, still more preferably on a "honeycomb" carrier. As regards the one or more reducing agents which are preferably used in the inventive SCR process, there is no particular restriction according to the present invention as to the compounds which may be used, wherein preferably the one or more reducing agents comprise ammonia and/or urea, wherein even more preferably the reducing agent preferably further comprised in the gaseous stream is ammonia and/or urea.

The nitrogen oxides which are reduced using a catalyst containing the zeolitic material according to any of the particular and preferred embodiments as described in the present application may be obtained from any process, in particular as a waste gas stream. Among others, waste gas streams as obtained in processes for producing adipic acid, nitric acid, hydroxylamine derivatives, caprolactame, glyoxal, methyl-glyoxal, glyoxylic acid or in processes for burning nitrogeneous materials may be mentioned.

Thus, according to preferred embodiments of the inventive method, the gas stream comprises one or more NOₓ containing waste gases, preferably one or more NOₓ containing waste gases from one or more industrial processes, wherein more preferably the NOₓ containing waste gas stream comprises one or more waste gas streams obtained in processes for producing adipic acid, nitric acid, hydroxylamine derivatives, caprolactame, glyoxal, methyl-glyoxal, glyoxylic acid or in processes for burning nitrogeneous materials, including mixtures of waste gas streams from two or more of said processes.

Alternatively and particularly preferred, however, is the use of a catalyst containing the zeolitic material according to any of the particular and preferred embodiments as described in the present application for removal of nitrogen oxides NOₓ from exhaust gases of internal combustion engines, in particular diesel engines or lean-burn gasoline engines, which operate at combustion conditions with air in excess of that required for stoichiometric combustion, i.e., under lean conditions. In particular, within the meaning of the present invnetion, "lean conditions" refer to conditions in which the ratio of air to fuel in the combustion mixtures supplied to such engines is maintained considerably above the stoichiometric ratio so that the resulting exhaust gases are "lean", i.e., the exhaust gases are relatively high in oxygen content. More specifically, lean-burn engines operate at an air to fuel ratio exceeding Lambda = 1.0, preferably exceeding Lamda = 1.2, and even more preferably exceeding Lambda = 1.5.

Thus, according to further preferred embodiments of the inventive method, the gas stream comprises a NOₓ containing waste gas stream from an internal combustion engine, preferably from an internal combustion engine which operates under lean-burn conditions, and more preferably from a lean-burn gasoline engine or from a diesel engine.

### DESCRIPTION OF THE FIGURES

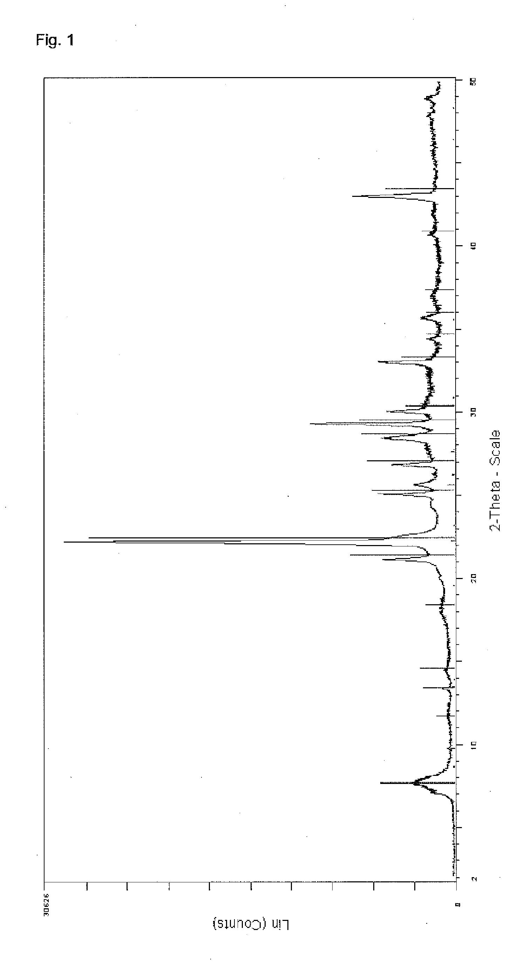

- Figure 1: shows the X-ray diffraction pattern (measured using Cu K alpha-1 radiation) of the crystalline material obtained according to Example 1, wherein the diffractogram further includes the line pattern of zeolite Beta obtained from template-mediated synthesis for comparison. In the figure, the angle 2 theta in ° is shown along the abscissa and the intensities are plotted along the ordinate.

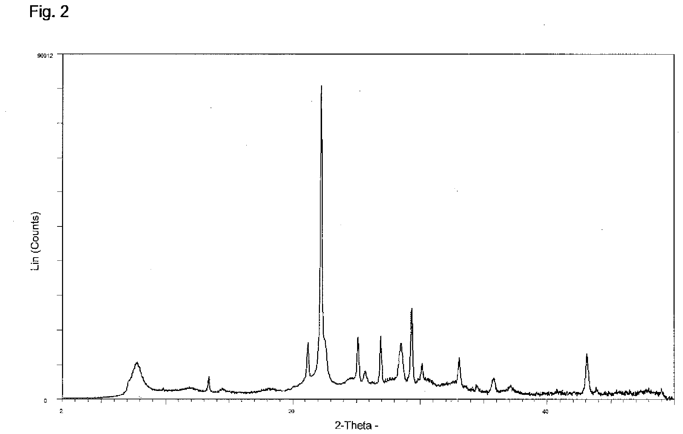

- Figure 2: shows the X-ray diffraction pattern (measured using Cu K alpha-1 radiation) of the crystalline material obtained according to Example B of Example 5. In the figure, the angle 2 theta in ° is shown along the abscissa and the intensities are plotted along the ordinate.

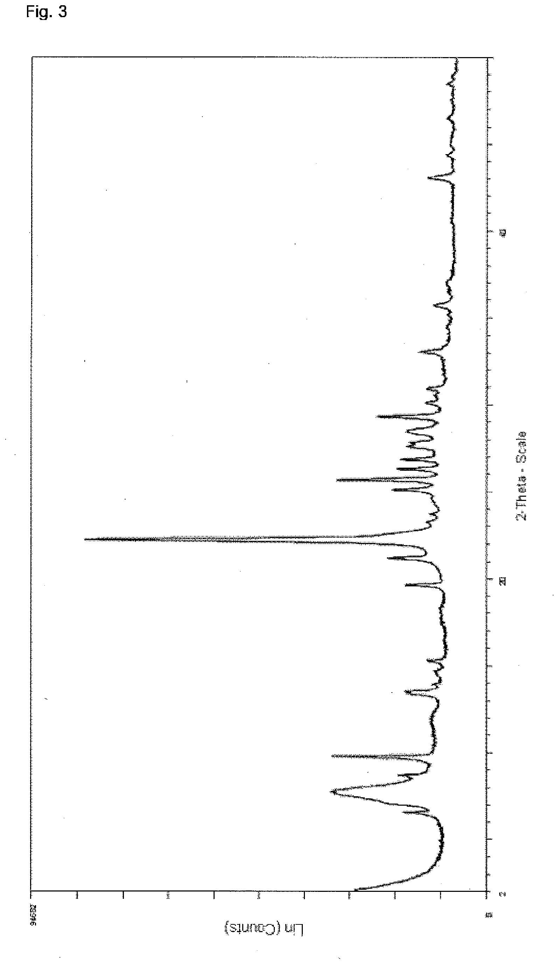

- Figure 3: shows the X-ray diffraction pattern (measured using Cu K alpha-1 radiation) of the crystalline material obtained according to Example H of Example 6. In the figure, the angle 2 theta in ° is shown along the abscissa and the intensities are plotted along the ordinate.

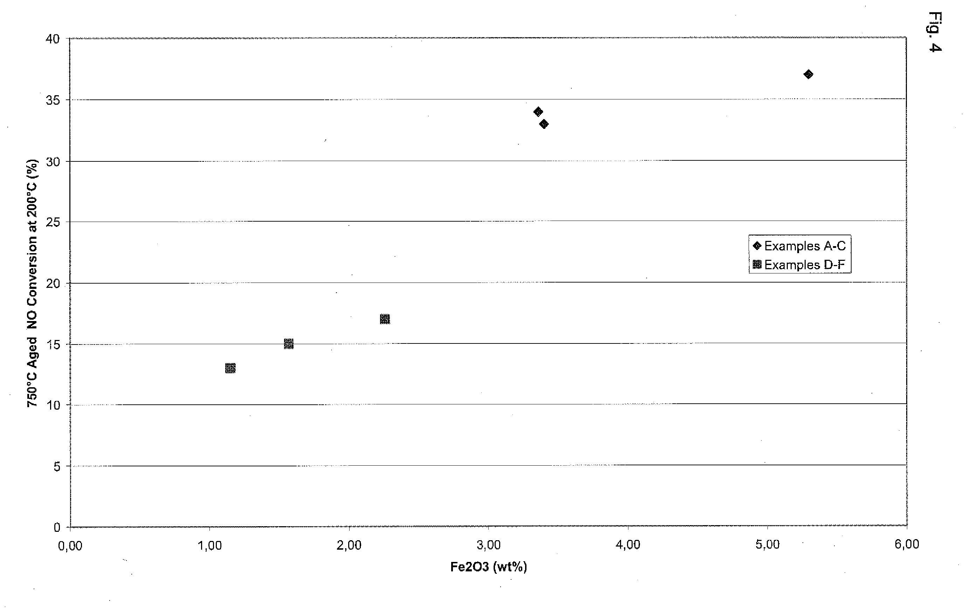

- Figure 4: displays the NO-conversion or "DeNOx" activity (in percent) based on the iron loading in wt.-% calculated as Fe₂O₃ of the "aged" catalysts according to the Examples A to F of Example 9 at an operating temperature of 200°C when measured at a volume based space velocity of 80,000 h⁻¹. In the figure, the loading of iron calculated as Fe₂O₃ in wt.-% as indicated in Table 1 is plotted along the abscissa and the NO conversion rate obtained in Example 9 is plotted along the ordinate. The values for Catalyst Examples A to C are indicated by the symbols (◆) and those for the Comparative Catalyst Examples D to F are indicated by the symbols (■).

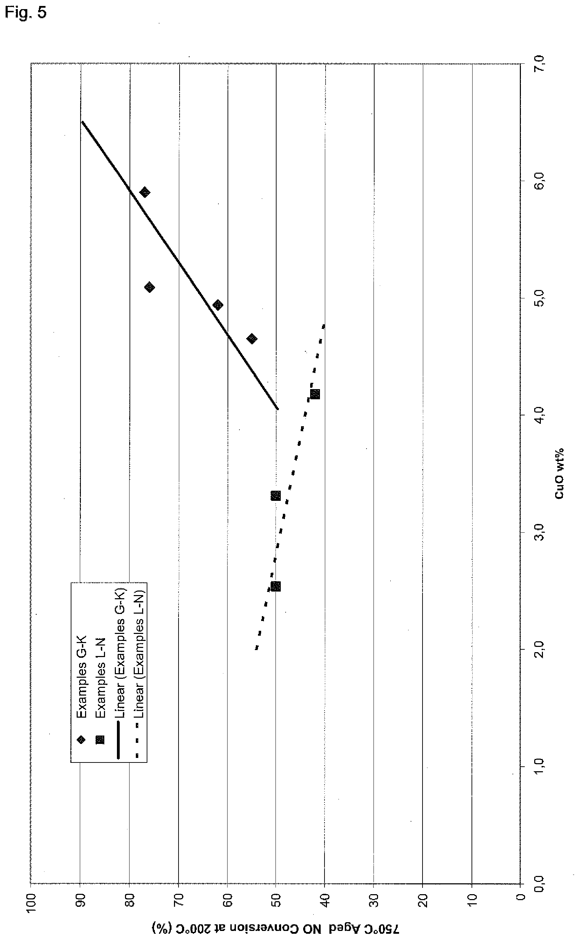

- Figure 5: displays the NO-conversion or "DeNOx" activity (in percent) based on the iron loading in wt.-% calculated as CuO of the "aged" catalysts according to the Examples G to N of Example 9 at an operating temperature of 200°C when measured at a volume based space velocity of 80,000 h⁻¹. In the figure, the loading of iron calculated as CuO in wt.-% as indicated in Table 2 is plotted along the abscissa and the NO conversion rate obtained in Example 9 is plotted along the ordinate. The values for Catalyst Examples G to K are indicated by the symbols (◆) and those for the Comparative Catalyst Examples L to N are indicated by the symbols (■). Furthermore, the linear regression of the NO conversion rate for Catalyst Examples G to K is included in the figure as a solid line, as well as for the Comparative Catalyst Examples L to N as a dotted line.

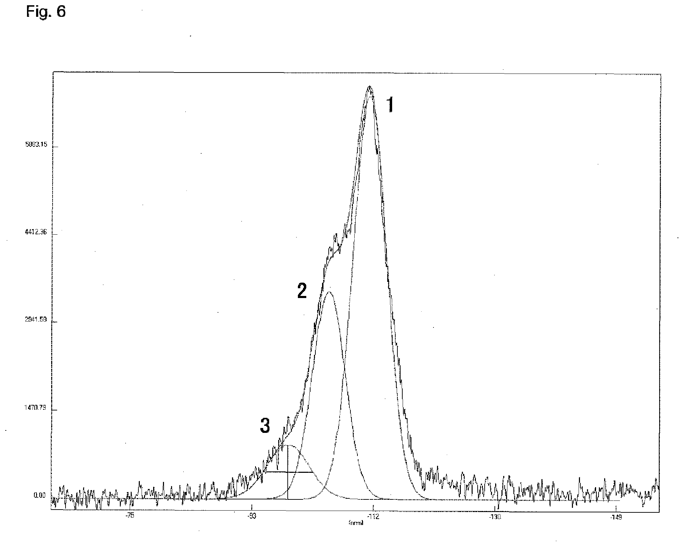

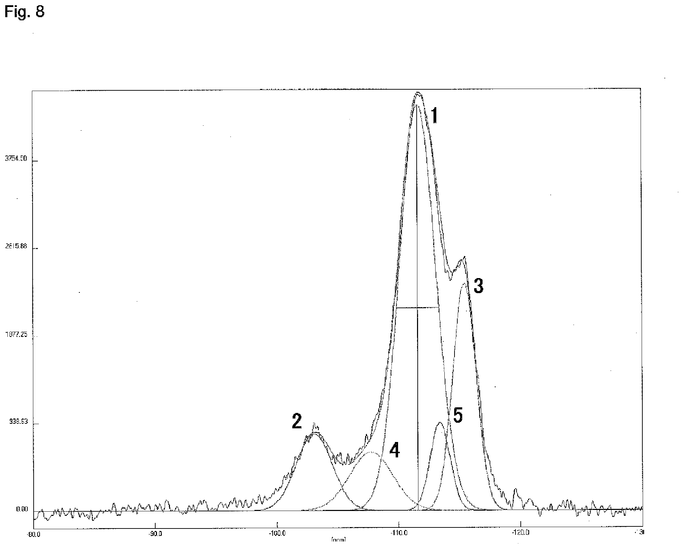

- Figures 6 and 8: respectively display the ²⁹Si MAS NMR spectrum obtained using samples from Examples 11 and 12, respectively, including the deconvoluted spectrum and numbering of the individual peaks found therein. In the figures, the values in ppm are plotted along the abscissa, and the signal intensity in arbitrary units is plotted along the ordinate, respectively.

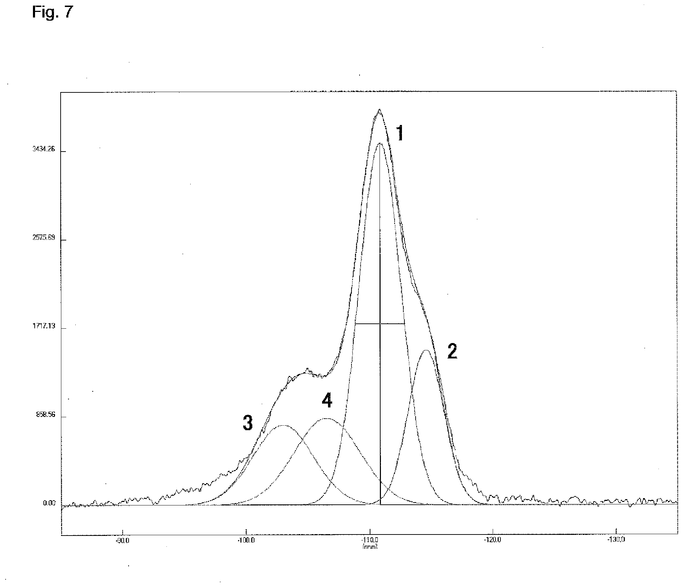

- Figure 7: displays the ²⁹Si MAS NMR spectrum obtained from a commercial sample of zeolite beta ion-exchanged with iron, wherein the figure includes the deconvoluted spectrum and numbering of the individual peaks found therein. In the figure, the values in ppm are plotted along the abscissa, and the signal intensity in arbitrary units is plotted along the ordinate.

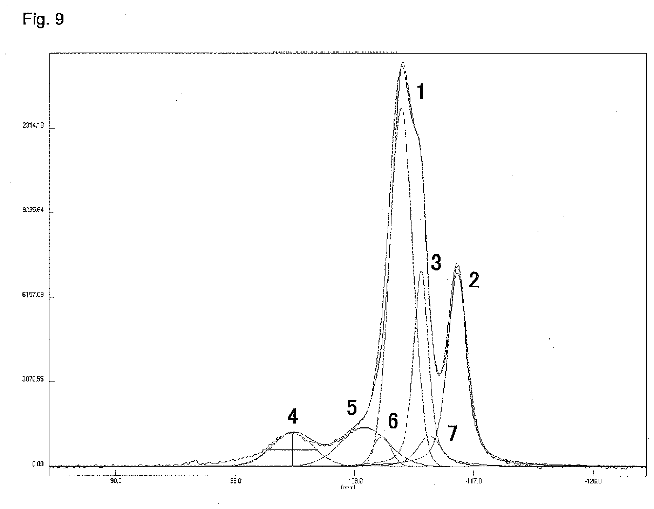

- Figure 9: displays the ²⁹Si MAS NMR spectrum obtained from a commercial sample of zeolite beta ion-exchanged with iron after ageing according to the regimen described in Example 12. The figure includes the deconvoluted spectrum and numbering of the individual peaks found therein, wherein the values in ppm are plotted along the abscissa, and the signal intensity in arbitrary units is plotted along the ordinate.

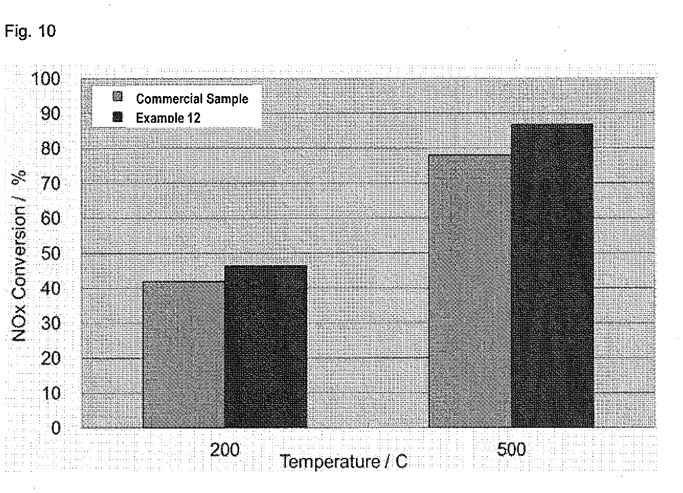

- Figure 10: displays the results from displays the NO-conversion activity of the aged catalyst sample of Example 12 compared to the aged commercial sample at operating temperatures of 200°C and 500°C, respectively. In the figure, the NOₓ conversion rate in % is plotted along the ordinate.

### EXAMPLES

The data from ²⁹Si MAS NMR contained in the present examples was obtained using a Bruker-Biospin AVANCE400 attached with solid 7 mm MAS-NMR probe using a transmitter frequency of 79.48 MHz, a sample spinning ration of 5000 rpm. The data was acquired in a ¹H-decoupled mode with a transmitter frequency of 400.13 MHz, and a pulse width of 12 µsec for the decoupled nucleus. The specific measuring conditions employed in the ²⁹Si solid state NMR experiment included a sweep-width of 39,682 Hz, an acquisition time of 0.051sec, a delay time of 7 sec, and a pulse width of 4.5 µsec. The samples were respectively measured at 300 K. The program used for data acquisition was hpdec, using line broadening factor of 10 Hz, wherein the number of scans was 480 times.

### Example 1: Organotemplate-free synthesis of zeolite Beta

335.1 g of NaAlO₂ were dissolved in 7,314 g of H₂O while stirring, followed by addition of 74.5 g of zeolite beta seeds (Product-Nr. CP814C from Zeolyst International which was converted to the H-form by calcination at 450°C for 5 h, wherein a heat ramp of 1°C/min was used for attaining the calcination temperature). The mixture was placed in a 20 L autoclave and 7,340 g sodium waterglass solution (26 wt.-% SiO₂ and 8 wt.-% Na₂O) and 1,436 g Ludox AS40 was added, affording an aluminosilicate gel with a molar ratio of 1.00 SiO₂ : 0.0421 Al₂O₃ : 0.285 Na₂O : 17.48 H₂O. The reaction mixture was heated in 3 h to a temperature of 120 °C using a constant heat ramp, wherein said temperature was then maintained 117 h for crystallization. After having let the reaction mixture cool to room temperature, the solid was separated by filtration, repeatedly washed with deionized water and then dried at 120 °C for 16 h affording 1,337 g of a white crystalline product.

Chemical analysis showed the material to have an SiO₂ : Al₂O₃ molar ratio of 9.93. The sodium content calculated as Na₂O was found to be 7.33 wt% on basis of the calcined material.

Figure 1 shows the XRD of the crystalline product obtained from the organotemplate-free synthesis of Example 1. In particular, the XRD pattern is typical for a BEA framework structure.

### Example 2: Ammonium-exchange of the zeolitic material from Example 1

100.0 g of the sodium form of the crystalline product as obtained from Example 1 were added to a solution of 142.2 g ammonium nitrate dissolved in 657.8 g of deionized water at 80 °C and the slurry was stirred at 300 rpm for 6 h at 80 °C. The solid was then filtered hot (without additional cooling) over a Buechner funnel with suitable filter paper. The filter cake then was washed with deionized water until the conductivity of the wash water was below 200 µS cm⁻¹. The filter cake was then dried for 16 h at 120 °C.

This procedure was repeated twice, thus affording an ion-exchanged crystalline product in its ammonium form. Chemical analysis showed this material to have an SiO₂ : Al₂O₃ molar ratio of 10.4.

### Example 3: Preparation of the H-form of Example 2

The ion-exchanged zeolitic material obtained from Example 2 was calcined at 450 °C for 5 h to afford the H-form thereof. Chemical analysis showed this material to have an SiO₂ : Al₂O₃ molar ratio of 9.91. The sodium content of the calcined material calculated as Na₂O was found to be 0.09 wt%.

### Example 4: Preparation of the H-form of Example 1

The procedure of Example 2 was repeated, wherein the ion-exchange procedure was only repeated once. The resulting ion-exchanged zeolitic material was accordingly calcined at 450 °C for 5 h to afford the H-form thereof. Chemical analysis showed this material to have an SiO₂ : Al₂O₃ molar ratio of 10.4. The sodium content of the calcined material calculated as Na₂O was found to be 0.80 wt%.

### Example 5: Iron-exchange of Examples 2 and 4 and Comparative Examples

Iron-exchanged samples were prepared according to Examples A to F as indicated in Table 1 below. For this purpose, an iron sulfate solution was prepared by dissolving iron(II) sulfate heptahydrate in deionized water, wherein the iron concentration was set as indicated in Table 1 for the respective samples. The respective solutions were heated to 80 °C and the respective zeolite beta starting material was added under stirring in an amount for achieving a weight ratio of the solution to the solid of 6.5, and the temperature of 80 °C was maintained for 2h. More specifically, as regards the zeolitic starting materials, for Examples A and B the zeolitic material from Example 3 was employed as the starting material, whereas for Example C the zeolitic material from Example 4 was used. For Comparative Examples D and E, on the other hand, a commercially available zeolite beta from Zeolyst (CP814C) was employed for iron-exchange. Comparative Example F is a commercially available iron-exchanged zeolite Beta (Product-Nr. SE08252 - finished SCR-grade - obtained from Seneca)

The respective slurry was then filtered hot (without additional cooling) over a Buechner funnel with a suitable filter paper. The filter cake was washed with deionized water until the conductivity of the wash water was below 200 µS cm⁻¹. The filter cake was then dried for 16 h at 120 °C. Table 1 respectively indicates the Fe₂O₃ and Na₂O loadings of all resulting products in wt.-%. Based on the further values from chemical analysis, the molar ratios of SiO₂ : Al₂O₃, Fe : Al, and Fe : H were then respectively calculated, as indicated in Table 1.

**Table 1: Data for the preparation of and from the chemical analysis of Examples A to C and Comparative Examples D to F as described in Example 5.**

| Starting material | Ex. A | Ex. B | Ex. C | Comp. Ex. D | Comp. Ex. E | Comp. Ex. F |
|---|---|---|---|---|---|---|
| | Ex. 3 | Ex. 3 | Ex. 4 | Zeolyst | Zeolyst | SE08252 |
| Fe concentration (M) | 0.1 | 0.25 | 0.1 | 0.1 | 0.25 | - |
| Fe₂O₃ (wt.-%) | 3.36 | 5.30 | 3.40 | 1.57 | 2.26 | 1.15 |
| Na₂O (wt.-%) | 0.03 | 0.03 | 0.25 | 0.01 | 0.00 | 0.01 |
| SiO₂:Al₂O₃ (molar) | 10.39 | 10.71 | 9.90 | 48.66 | 53.79 | 32 |
| Fe:AI (molar) | 0.08 | 0.13 | 0.08 | 0.15 | 0.24 | 0.08 |
| Fe:H (molar) | 0.09 | 0.18 | 0.09 | 0.22 | 0.47 | 0.09 |
| moles Fe per 100g zeolite (moles) | 0.021 | 0.033 | 0.021 | 0.010 | 0.014 | 0.007 |
| Fe Yield (%) | 59 | 39 | 61 | 29 | 16 | - |

Figure 2 shows the XRD after iron-exchange of the crystalline product obtained from Example 3 according to Example B of Example 5 as indicated in Table 1.

### Example 6: Copper-exchange of Examples 2 and 3 and Comparative Examples

Copper-exchanged samples were prepared according to Examples G to N as indicated in Table 2 below. For this purpose, a copper acetate solution was prepared by dissolving copper(II) acetate monohydrate in deionized water, wherein the copper concentration was set as indicated in Table 2 for the respective samples. The respective solutions were heated to 60 °C and the respective zeolite beta starting material was added under stirring in an amount for achieving a weight ratio of the solution to the solid of 6.5, and the temperature of 60 °C was maintained for 2h. More specifically, as regards the zeolite beta starting materials, for Comparative Examples G, H, and J, the zeolitic material as obtained from Example 2 was employed as the starting material, whereas for Example K, the zeolitic material as obtained from Example 3 was used. For Comparative Examples L, M, and N, a commercially available zeolite beta from Zeolyst (CP814C) was employed for ion-exchange with copper.

The respective slurry was then filtered hot (without additional cooling) over a Buechner funnel with a suitable filter paper. The filter cake then was washed with deionized water until the conductivity of the wash water was below 200 µS cm⁻¹. The filter cake was then dried for 16 h at 120 °C. Table 2 respectively indicates the CuO and Na₂O loadings of all resulting products in wt.-%. Based on the further values from chemical analysis, the molar ratios of SiO₂ : Al₂O₃, Cu : Al, and Cu : H were then respectively calculated, as indicated in Table 2.

**Table 2: Data for the preparation of and from the chemical analysis of Examples G to K and Comparative Examples L to N as described in Example 6.**

| Starting material | Com p. Ex. G | Com p. Ex. H | Com p. Ex. J | Ex. K | Comp. Ex. L | Comp. Ex. M | Comp. Ex. N |
|---|---|---|---|---|---|---|---|
| | Ex.2 | Ex. 2 | Ex. 2 | Ex. 3 | Zeolyst | Zeolyst | Zeolyst |
| Cu concentration (M) | 0.6 | 0.4 | 0.25 | 0.6 | 0.6 | 0.25 | 0.1 |
| CuO (wt.-%) | 5.9 | 4.9 | 4.7 | 5.09 | 4.2 | 3.3 | 2.5 |
| Na2O (wt.-%) | 0.04 | 0.04 | 0.04 | 0.02 | 0.01 | 0.01 | 0.01 |
| SiO2:Al2O3 | 10 | 11 | 10 | 11 | 43 | 41 | 41 |
| Cu:Al | 0.28 | 0.24 | 0.22 | 0.25 | 0.73 | 0.56 | 0.43 |
| Cu:H | 0.40 | 0.32 | 0.29 | 0.34 | 2.72 | 1.27 | 0.74 |
| moles Cu per 100g zeolite (moles) | 0.074 | 0.062 | 0.058 | 0.06 | 0.053 | 0.042 | 0.032 |
| Cu Yield (%) | 17 | 22 | 32 | 15 | 12 | 24 | 46 |

Figure 3 shows the XRD after copper-exchange of the crystalline product obtained from Example 2 according to Comparative Example H of Example 6 as indicated in Table 2. As may be taken from the diffractogramm, the reflections typical for the BEA framework structure are apparent, wherein reflections from mordenite present as an impurity in the sample is equally seen.

### Example 7: Preparation of Catalyst (Catalyst Examples A to N)

The powder was first prepared as an extrudate before testing. 18 g water were added to 20 g dried powder in a Stephan-Werke GmbH mixer (Model No.: 0ZDe042/4s) at a mixing rat of 80 rpm. The slurry way mixed 10 minutes to afford a homogeneous mixture. Then 0.5 g of polyethylenoxide (PEO) were added and mixed 2 minutes until homogeneous. 2.5 wt% PEO was added to the mixture as a binder. Then 2 g of water were added slowly and the paste was mixed for about 5 minutes to homogenize. This paste then was pressed in a hand-made press with an extruding hole of 2 mm diameter and 10 cm length. The resulting extrudates were dried at 120 °C for 5 hours and calcined at 540 °C for 5 hours. The extrudate was then sized into pellets and sieved to separate a pellet size ranging from 0.5 to 1 mm. This size fraction was used for testing in the reactor. The sieves used were obtained from the company Retsch (500 µm sieve S/N 04025277) and a 1 mm sieve (S/B 04009529) both having a diameter of 200 mm and height of 25 mm). The resultant catalysts are referred to as "fresh" thus indicating that they have not been subject to hydrothermal aging.

### Example 8: Aging

The aging reactor consisted of a 1 mm thick steel tube (grade 1.4841 from Buhlmann Group) with diameters of 500 mm height and 18 mm internal diameter. A nickel mantle based furnace was used to heat the reactor to the target reaction temperature which was monitored by an internal thermocouple at the location of the sample. The steam was prepared by heating controlled amounts of water at 150 °C through a steel pre-steamer before mixing with the remaining gases in a static mixer. The gases together with the steam were then passed through a pre-heater to enable the target temperature. The extrudates formed as described in Example 7 were hydrothermally aged in a tube furnace in a gas flow containing 10 vol.-% H₂O, 10 vol.-% O₂, balance N₂ at a space velocity of 11,250 h⁻¹ for 24 hours at 750°C.

In the following, the examples of the catalyst are designated in the same fashion as in Table 1 and 2 relative to the zeolitic material contained therein, respectively. Thus, Catalyst Example A as designated in Tables 3 and 4 below indicates that it has been prepared with the iron-exchange sample from Example A as described in Example 5 and Table 1, respectively. Accordingly, Comparative Catalyst Example G as designated in tables 4 and 6 refers to the catalyst which has been prepared with the copper-exchanged zeolitic material of Comparative Example G as described in Example 6 and Table 2, respectively. Table 3 reports the surface area data and Table 5 reports the catalytic data for iron-exchanged catalyst samples A to F. Table 4 reports the surface area data and Table 6 reports the catalytic data for copper-exchanged catalyst samples G to N.

**Table 3: Surface Area data for Catalyst Examples A to F in "fresh" and "aged" states as well as surface area retention after aging.**

| | Cat. Ex. A | Cat. Ex. B | Cat. Ex. C | Comp. Cat. Ex. D | Comp. Cat. Ex. E | Comp. Cat. Ex. F |
|---|---|---|---|---|---|---|
| "fresh" Langmuir (m²/g) | 651 | 629 | 657 | 807 | 801 | 709 |
| 750°C "aged" Langmuir (m²/g) | 557 | 519 | 550 | 677 | 673 | 599 |
| 750°C "aged" Langmuir retention (%) | 86 | 83 | 84 | 84 | 84 | 84 |

**Table 4: Surface Area data for Catalyst Examples G to N in "fresh" and "aged" states as well as surface area retention after aging.**

| | Comp. Cat. Ex. G | Comp. Cat. Ex. H | Comp. Cat. Ex. J | Cat. Ex. K | Comp. Cat. Ex. L | Comp. Cat. Ex. M | Comp. Cat. Ex. N |
|---|---|---|---|---|---|---|---|
| "fresh" Langmuir (m²/g) | 674 | 671 | 683 | 625 | 761 | 759 | 780 |
| 750°C "aged" Langmuir (m²/g) | 530 | 532 | 561 | 529 | 382 | 502 | 593 |
| 750°C "aged" Langmuir retention (%) | 79 | 79 | 82 | 85 | 50 | 66 | 76 |

### Example 9: Catalytic Testing (Catalyst Examples A to N)

The aged catalysts samples obtained from Example 8 were evaluated for selective catalytic reduction (SCR) of NOx activity using the following reactor set up: The reactor consisted of a 1 mm thick steel tube (grade 1.4541 from Buhlmann Group) with diameters of 500 mm height and 18 mm internal diameter. A copper mantle based furnace was used to heat the reactor to the target reaction temperature which was monitored by an internal thermocouple at the location of the sample.

5 ml of a sample was respectively loaded into the reactor and secured with a plug of silica wool at each end of the sample. The sample height is controlled by filling the empty reactor volume with an inert silica based material (Ceramtek AG - product # 1.080001.01.00.00; 0.5 to 1 mm - 45 g at the bottom and 108 g at the top of the sample).

An inlet gas mixture was formed containing 500 ppm NO, 500 ppm NH₃, 10 vol.-% O₂, 5 vol.-% steam and balance He. The steam was prepared by heating controlled amounts of water at 150°C through a steel pre-steamer (grade 1.4541 from Buhlmann, dimensions were 6 mm internal diameter and 900 mm length) before mixing with the remaining gases in a static mixer. This gas mixture then passed through a pre-heater set at 250°C and static mixer before entering the SCR reactor described in the previous paragraph.

The NO-conversion or "DeNOx" activity was measured under steady state conditions by measuring the NOx, NH₃ and N₂O concentrations at the outlet using a FTIR spectrometer. Samples were tested at reaction temperatures of 200, 300 and 450°C at a volume-based gas hourly space velocity of 80,000 h⁻¹. NO conversion was then calculated as (NO outlet concentration (ppm)/NO inlet concentration (ppm))^{∗}100. N₂O make was also recorded as concentration in ppm. The results obtained for the inventive Catalyst Example A - C and K as well as for the Comparative Catalyst Examples D - H, J and L - N are shown in Tables 5 and 6, respectively, for the respective catalyst sample in their "fresh" state as obtained from Example 7, as well as in their "aged" state as obtained from Example 8.

**Table 5: Catalytic performance of Catalyst Examples A to F in "fresh" and "aged" states.**

| | Cat. Ex. A | Cat. Ex. B | Cat. Ex. C | Comp. Cat. Ex. D | Comp. Cat. Ex. E | Comp. Cat. Ex. F |
|---|---|---|---|---|---|---|
| "fresh" NO Conversion at 200°C (%) | 76 | 75 | 80 | 37 | 36 | 17 |
| "fresh" NO Conversion at 300°C (%) | 89 | 94 | 90 | 72 | 81 | 71 |
| "fresh" NO Conversion at 450°C (%) | 91 | 95 | 91 | 79 | 89 | 90 |
| 750°C "aged" NO Conversion at 200°C (%) | 34 | 37 | 33 | 15 | 17 | 13 |
| 750°C "aged" NO Conversion at 300°C (%) | 82 | 87 | 79 | 78 | 75 | 62 |
| 750°C "aged" NO Conversion at 450°C (%) | 90 | 92 | 88 | 88 | 89 | 82 |

In Figure 4, the values of Table 5 for the DeNOx activity of the aged iron-exchanged catalyst according to the inventive Catalyst Examples A to C as well as according to the Comparative Catalyst Examples D to F as obtained for Example 9 at a reaction temperature of 200°C and at a gas hourly space velocity of 80,000 h⁻¹ is shown. In particular, as may be taken from these results, the aged catalyst samples according to the present invention show a clearly superior SCR activity at low reaction temperatures compared to the comparative examples. Considering the further values displayed in Table 5 for the inventive and comparative catalyst samples, the same applies with respect to the fresh catalyst samples at said low conversion temperature of 200°C. Furthermore, it may be taken from Table 5 that the SCR activity of the inventive catalyst samples clearly outperforms the comparative catalyst samples at all temperatures which were tested, and irrespective of the "fresh" or "aged" state thereof. Consequently, the results from Example 9 clearly show that the inventive iron-exchanged zeolitic material and catalysts obtained therewith have improved SCR catalytic activity, in particular at low conversion temperatures which are for example typical of cold-start conditions in the treatment of NOₓ in automotive applications. With respect to other SCR applications, the iron-exchanged zeolitic materials of the present invention allow a higher conversion at lower temperatures, thus allowing for a higher efficiency and thus, at comparable conversion rates, allowing for a highly energy-efficient treatment of NOₓ containing waste gases, for example of waste gases resulting from industrial processes.

**Table 6: Catalytic performance of Catalyst Examples G to N in "fresh" and "aged" states.**

| | Comp. Cat. Ex. G | Comp. Cat. Ex. H | Comp. Cat. Ex. J | Cat. Ex. K | Comp. Cat. Ex. L | Comp. Cat. Ex. M | Comp. Cat. Ex. N |
|---|---|---|---|---|---|---|---|
| "fresh" NO Conversion at 200°C (%) | **91** | **87** | **86** | **82** | 76 | 90 | 84 |
| "fresh" NO Conversion at 300°C (%) | 90 | 90 | 90 | 83 | 80 | 92 | 88 |
| "fresh" NO Conversion at 450°C (%) | 83 | 82 | 86 | 82 | 82 | 87 | 85 |
| 750°C "aged" NO Conversion at 200°C (%) | **77** | **62** | **55** | **76** | 42 | 50 | 50 |
| 750°C "aged" NO Conversion at 300°C (%) | 84 | 66 | 65 | 78 | 73 | 83 | 78 |
| 750°C "aged" NO Conversion at 450°C (%) | 80 | 68 | 71 | 75 | 82 | 74 | 70 |

In Figure 5, on the other hand, the values of Table 6 for the DeNOx activity of the aged copper-exchanged catalyst according to the inventive Catalyst Example K as well as according to the Comparative Catalyst Examples G, H, J and L to M as obtained for Example 9 at a reaction temperature of 200°C and at a gas hourly space velocity of 80,000 h⁻¹ is shown. As may be taken from the results in Table 6, although the catalyst activity of the inventive catalyst examples is improved or at least comparable in the "fresh" state to the comparative catalyst examples. With respect to the "aged" samples, it may however be taken from the results displayed in Table 6 that the inventive catalyst samples outperform the comparative catalyst samples, again in particular at low conversion temperatures.

All the more surprisingly, however, it is observed that compared to the activity of the comparative catalyst examples, the inventive catalyst example displays an increase in catalytic activity with higher loadings of the zeolitic material with copper, a tendency which is particularly apparent at lower conversion temperatures. Thus, as may be taken from the results displayed in Figure 5, an increase in the catalyst loading in the comparative catalyst samples leads to a decrease in the catalytic activity in the "aged" samples (Comparative Examples H, J, and L to M), whereas for the inventive catalyst sample a clear increase in catalytic activity is observed. Thus, as is particularly apparent for the copper-exchanged zeolitic materials of the present invention which have been subject to comparative testing in Example 9, the inventive zeolitic materials quite unexpectedly display an evolution in their catalytic activity which is not only contrary to the behavior observed in catalyst samples according to the prior art, but which allows for the provision of improved catalysts towards higher loadings with copper and/or iron. Consequently, as may be taken from the results in comparative testing, the inventive materials display not only a surprisingly improved catalytic activity in SCR but quite unexpectedly reveal a completely unexpected behavior with respect to their response to higher loading of copper and/or iron such that highly improved materials may be provided for use in SCR-applications, the efficiency of which is by no possible means accessible by the prior art catalysts even at higher catalyst loadings due to their deterioration in this respect.

### Example 10: Ammonium-exchange of the zeolitic material from Example 1

100.0 g sodium form of the crystalline product from Example 1 were added to a solution of 100.0 g ammonium nitrate dissolved in 898.8 g of distilled water and heated to 80 °C. The slurry was stirred at 300 rpm for 2 h at 80 °C. The solid was then filtered using a filter press. The filter cake then was washed with distilled water (room temperature wash water) until the conductivity of the wash water was below 100 µS cm⁻¹. The filter cake was then dried for 16 h at 120 °C. This procedure was repeated once, affording ion exchanged crystalline product BEA in its ammonium form. Chemical analysis showed this material to have 10.6 SiO₂ : Al₂O₃ and 0.07 wt% of Na₂O on a calcined basis.

### Comparative Example 11: Iron-exchange of Example 10

An iron sulfate solution was prepared by dissolving 130.8 g iron sulfate heptahydrate (APPLICHEM) in 519.5 g of distilled water. This solution was heated to 80 °C and under stirring 100 g of NH₄-Beta from Example 10 was added. The temperature of 80 °C was maintained for 2h. The slurry was then filtered over a Buechner funnel with appropriate filter paper. The filter cake was washed with distilled water (room temperature wash water) until the conductivity of the wash water was below 200 µS cm⁻¹. The filter cake was then dried for 16 h at 120 °C. Calcination at 500 °C for 5 h (heating ramp 1 °C/min) gave iron exchanged Fe-Beta with Fe₂O₃ content found at 4.94 wt% and Na₂O content at 0.01 wt% on calcined basis via elemental analysis. The SiO₂ : Al₂O₃ ratio was 10.5.

Figure 6 shows the ²⁹Si MAS NMR spectrum of the product obtained from Example 11, together with the deconvoluted spectrum. The chemical shifts and integrals of the deconvoluted spectrum are displayed in Table 7 below, wherein the numbering of the individual peaks corresponds to the numbering indicated in Figure 6 for the deconvoluted spectrum.

**Table 7: Position and integrals of the peaks from the deconvoluted spectrum in Figure 6, including the assignment of the Si-species in function of neighboring Al-sites.**

| **Peak No.** | **Peak top [ppm]** | **Peak area** | **area ratio [%]** | **assignment** |
|---|---|---|---|---|
| 1 | -111.24 | 3493022 | 59.93 | Si (0Al) |
| 2 | -104.96 | 1748587 | 30 | Si (1Al) |
| 3 | -98.77 | 586576 | 10.06 | Si (2Al) |
| | | Total | 100.0 | |

Based on the data in Table 7, the Si : Al ratio of the zeolite framework was determined according to the procedure outlined in J. Klinowski et al. in J. Chem. Soc., Faraday Trans. 2 1982, 78, pp. 1025-1050 (see in particular formula on page 1034). In particular, this is possible based on the assignment of the individual Si-species detected in function of the number of neighboring Al-atoms to which they are bound via bridging with oxygen. Thus, as may be taken from Table 7, Peak No. 3 is attributed to a Si-species bound to 2 Al-species via oxygen and Peak No. 2 to a Si-species bound to 1 Al-species via oxygen, whereas the remaining peaks are attributed to Si-species not (directly) bound to Al via (one) oxygen bridge, but rather only bound to further Si via oxygen. Based on the ²⁹Si MAS NMR-data in Table 7, the Si : Al ratio in the zeolite framework of the sample obtained from Example 11 is calculated to 8.0.

For comparison, a commercial sample of zeolite beta ion-exchanged with iron was measured in the ²⁹Si MAS NMR experiment, the spectrum of which is displayed in Figure 7. The chemical shifts and integrals of the deconvoluted spectrum are displayed in Table 8 below, wherein again the numbering of the individual peaks corresponds to the numbering indicated in Figure 7 for the deconvoluted spectrum, and the assignment of the Si-species based on the number of neighboring Al-sites is accordingly indicated for the individual peaks.

**Table 8: Position and integrals of the peaks from the deconvoluted spectrum in Figure 7, including the assignment of the Si-species in function of neighboring Al-sites.**

| **Peak No.** | **Peak top [ppm]** | **Peak area** | **area ratio [%]** | **assignment** |
|---|---|---|---|---|
| 1 | -110.90 | 1194412.11 | 48.62 | Si (0Al) |
| 2 | -114.63 | 435789.16 | 17.74 | Si (0Al) |
| 3 | -103.03 | 380105.1 | 15.47 | Si (1Al) |
| 4 | -106.58 | 446162.11 | 18.16 | Si (0Al) |
| | | Total | 100.0 | |

As for the iron-exchanged sample according to Comparative Example 11, the Si : Al ratio of the zeolite framework of the commercial sample was determined according to the ²⁹Si MAS NMR-data in Table 8, the Si : Al ratio in the zeolite framework of the sample being calculated to 25.9.

### Example 12: Aging of the samples

For investigating the behavior of the iron-exchanged zeolite beta of Comparative Example 11 according to the present invention under aging conditions, a sample thereof was subject to an ageing procedure. To this effect, 2 g of the sample were transferred onto a ceramic plate (dimensions: Length: 60 x Width: 35 x Depth: 5 [mm]) which was then played in an electric furnace (Model: OXK-600X electric furnace, made by KYOEI ELECTRIC KILNS CO., LTD). The furnace was then heated to 150°C, and a gas stream of air containing 10 vol.-% H₂O was fed into the furnace at a gas hourly space velocity of 10 h⁻¹. The furnace was then heated to 650°C at a heating rate of 10°C/h and kept at that temperature for 100 h. The furnace was then subsequently cooled down and the gas stream with 10 vol.-% H₂O was interrupted and replaced with a gas stream of dry air until the sample had cooled down to room temperature.

After aging, the sample was again investigated by ²⁹Si MAS NMR, the results of which are displayed in Figure 8. Again, the chemical shifts and integrals of the deconvoluted spectrum are displayed in Table 9 below, wherein the numbering of the individual peaks corresponds to the numbering indicated in Figure 8 for the deconvoluted spectrum.

**Table 9: Position and integrals of the peaks from the deconvoluted spectrum in Figure 8, including the assignment of the Si-species in function of neighboring Al-sites.**

| **Peak No.** | **Peak top [ppm]** | **Peak area** | **area ratio [%]** | **assignment** |
|---|---|---|---|---|
| 1 | -111.59 | 1288386.87 | 54.55 | Si (0Al) |
| 2 | -103.05 | 238510.48 | 10.1 | Si (1Al) |
| 3 | -115.43 | 464536.47 | 19.67 | Si (0Al) |
| 4 | -107.72 | 219284.78 | 9.28 | Si (0Al) |
| 5 | -113.40 | 151184.19 | 6.4 | Si (0Al) |
| | | Total | 100.0 | |

As for Comparative Example 11, the Si : Al ratio of the zeolite framework of the aged sample of Example 12 was determined according to the data in Table 8, the Si : Al ratio in the zeolite framework of the sample being calculated from ²⁹Si MAS NMR to 39.6.

For comparison, the commercial sample of zeolite beta ion-exchanged with iron was also subject to the aging procedure, and subsequently measured in the ²⁹Si MAS NMR experiment, the spectrum of which is displayed in Figure 9. The chemical shifts and integrals of the deconvoluted spectrum are displayed in Table 10 below.

**Table 10: Position and integrals of the peaks from the deconvoluted spectrum in Figure 9, including the assignment of the Si-species in function of neighboring Al-sites.**

| **Peak No.** | **Peak top [ppm]** | **Peak area** | **area ratio [%]** | **assignment** |
|---|---|---|---|---|
| 1 | -111.53 | 2265131.5 | 39.29 | Si (0Al) |
| 2 | -115.77 | 1247987.79 | 21.65 | Si (0Al) |
| 3 | -113.04 | 971819.75 | 16.86 | Si (0Al) |
| 4 | -103.35 | 373896.36 | 6.49 | Si (1Al) |
| 5 | -108.75 | 511789.31 | 8.88 | Si (0Al) |
| 6 | -110,07 | 148362.08 | 2.57 | Si (0Al) |
| 7 | -113,66 | 245573.73 | 4.26 | Si (0Al) |
| | | Total | 100,0 | |

The Si : Al ratio of the zeolite framework of the aged commercial sample was also determined according to the data in Table 10, the Si : Al ratio in the zeolite framework of the sample being calculated from ²⁹Si MAS NMR to 61.6.

Thus, as may be taken from the results obtained for the aged samples, based on the Si : Al ratios obtained from ²⁹Si MAS NMR for the fresh and aged samples, the iron-exchanged zeolite beta according to the present invention is dealuminated to an extent by the aging procedure of Example 12, such that the Si : Al ratio obtained considerably increases from an initial value of 8 to a value of 40, which would correspond to about 80% of the initial aluminum being removed from the framework. The commercial sample, on the other hand, displays an increase in the Si : Al ratio obtained from ²⁹Si MAS NMR from initially 26 to a value of 62 after the dealumination procedure. This would correspond to about 58% of the initial aluminum being removed from the framework structure. Thus, considering that judging from the Si : Al ratios obtained from ²⁹Si MAS NMR, more than 3 times as much Al was contained in the comparative sample according to Example 11 prior to aging, the extent of dealuminaton observed in the iron-exchanged zeolite beta according to the present invention is considerably greater than observed for the commercial iron-exchanged zeolite beta.

For investigating the effect of aging on the catalytic activity of the iron-exchanged zeolite beta according to the present invention, the DeNOx-activity of the aged sample of Example 12 was determined at 200°C and 500°C, and compared to the activity measured for the aged commercial sample at these temperatures. The results of the NOx-conversion experiments for the respective samples is displayed in Figure 10. Thus, as may be taken from the results, the aged sample according to Example 12 shows superior DeNOx activity after aging compared to the commercial sample which has been subject to the same aging procedure.

The results from the catalytic testing performed with these materials are, however, highly unexpected considering the considerable degree of dealumination which the sample of Example 12 has suffered compared to the commercial sample. In particular, although it may well have been expected that the superior catalytic activity displayed by the catalyst samples according to the present invention compared to comparative examples after having been exposed to an aging procedure would be the result of a higher stability of the framework structure when exposed to said aging conditions, the present data from ²⁹Si MAS NMR actually indicate that quite to the contrary the Al-rich framework of the tested materials are prone to considerable dealumination under aging conditions. These highly unexpected findings only further demonstrate the unique characteristics and properties of the inventive materials which strongly contrast to the materials known in the art, not only in view of their physical characteristics but also based on their chemical traits and properties which may not be compared to those of conventional catalytic materials

### Cited Prior Art Documents

- US 3,308,069 A
- US 4,554,145 A
- US 4,642,226 A
- US 5,139,759 A
- Xiao et al., Chem. Mater. 2008, 20, pp. 4533-4535
- WO 2010/146156 A1
- Majano et al., Chem. Mater. 2009, 21, pp. 4184-4191
- US 4,961,917 A
- WO 2008/106519 A1
- J. Klinowski et al. in J. Chem. Soc., Faraday Trans. 2 1982, 78, pp. 1025-105
- WO 2010/146156 A1
- WO 2013/035077 A1
- WO 2011/146615 A2

## Claims

1. Process for the production of a zeolitic material having a BEA-type framework structure comprising YO₂ and X₂O₃, wherein said process comprises the steps of
(1) preparing a mixture comprising one or more sources for YO₂, one or more sources for X₂O₃, and seed crystals comprising one or more zeolitic materials having a BEA-type framework structure;
(2) crystallizing the mixture obtained in step (1); and
(3) subjecting the zeolitic material having a BEA-type framework structure obtained in step (2) to an ion-exchange procedure with Cu and/or Fe, wherein (3) comprises
(3a) exchanging one or more of the ionic non-framework elements contained in the zeolitic material having a BEA-type framework structure obtained in step (2) against H⁺ and/or NH₄⁺; and
(3b) calcining the zeolitic material having a BEA-type framework structure obtained in step (3a); and
(3c) exchanging one or more of the ionic non-framework elements contained in the zeolitic material having a BEA-type framework structure obtained in step (3b) against Cu and/or Fe;
wherein Y is a tetravalent element, and X is a trivalent element,
wherein the mixture provided in step (1) and crystallized in step (2) does not contain an organotemplate as structure-directing agent, and
wherein the total amount of Cu and/or Fe in the ion-exchanged material obtained in step (3) ranges from 3 to 25 wt.-% calculated as CuO and Fe₂O₃.

2. The process of claim 1, wherein the zeolitic material obtained in step (2) comprises one or more alkali metals M, wherein M is preferably selected from the group consisting of Li, Na, K, Cs, and combinations of two or more thereof, more preferably from the group consisting of Li, Na, K, and combinations of two or more thereof, wherein more preferably the alkali metal M is Na and/or K, even more preferably Na.

3. The process of claim 1 or 2, wherein Y is selected from the group consisting of Si, Sn, Ti, Zr, Ge, and a mixture of two or more thereof, Y preferably being Si.

4. The process of any of claims 1 to 3, wherein the one or more sources for YO₂ provided in step (1) comprises one or more silicates, preferably one or more alkali metal silicates, wherein the alkali metal is preferably selected from the group consisting of Li, Na, K, Rb, and Cs, wherein more preferably the alkali metal is Na and/or K, and wherein even more preferably the alkali metal is Na.

5. The process of claim 4, wherein the one or more sources for YO₂ further comprises one or more silicas in addition to the one or more silicates, preferably one or more silica hydrosols and/or one or more colloidal silicas, and even more preferably one or more colloidal silicas in addition to the one or more silicates.

6. The process of claim 4 or 5, wherein the mixture provided in step (1) comprises water glass, preferably sodium and/or potassium silicate, more preferably sodium silicate.

7. The process of any of claims 1 to 6, wherein X is selected from the group consisting of Al, B, In, Ga, and a mixture of two or more thereof, X preferably being Al.

8. The process of any of claims 1 to 7, wherein the one or more sources for X₂O₃ comprises one or more aluminate salts, preferably an aluminate of an alkali metal, wherein the alkali metal is preferably selected from the group consisting of Li, Na, K, Rb, and Cs, wherein more preferably the alkali metal is Na and/or K, and wherein even more preferably the alkali metal is Na.

9. The process of any of claims 1 to 8, wherein the molar ratio YO₂ : X₂O₃ of the mixture according to step (1) ranges from 1 to 200, preferably from 5 to 100, more preferably from 10 to 50, more preferably from 15 to 40, more preferably from 20 to 30, more preferably from 23 to 25, and even more preferably from 23.5 to 24.

10. The process of any of claims 1 to 9, wherein the amount of seed crystals comprised in the mixture according to step (1) ranges from 0.1 to 30 wt.-% based on 100 wt.-% of YO₂ in the one or more sources for YO₂, preferably from 0.5 to 20 wt.-%, more preferably from 1 to 10 wt.-%, more preferably from 1.5 to 5 wt.-%, more preferably from 2 to 4 wt.-%, and even more preferably from 2.5 to 3.5 wt.-%.

11. The process of any of claims 1 to 10, wherein the mixture according to step (1) further comprises one or more solvents, wherein said one or more solvents preferably comprises water, more preferably deionized water.

12. The process of claim 11, wherein the molar ratio H₂O : YO₂ of the mixture according to step (1) ranges from 5 to 100, preferably from 10 to 50, more preferably from 13 to 30, more preferably from 15 to 20, and even more preferably from 17 to 18.

13. The process of any of claims 2 to 12, wherein the molar ratio M : YO₂ in the mixture according to step (1) ranges from 0.05 to 5, preferably from 0.1 to 2, more preferably from 0.3 to 1, more preferably from 0.4 to 0.8, more preferably from 0.45 to 0.7, more preferably from 0.5 to 0.65, and even more preferably from 0.55 to 0.6.

14. The process of any of claims 2 to 13, wherein the molar ratio YO₂: X₂O₃ : M molar ratio in the mixture according to step (1) range from (1 to 200) : 1 : (0.5 to 100), preferably from (5 to 100) : 1 : (5 to 75), more preferably from (10 to 50) : 1 : (8 to 50), more preferably from (15 to 40) : 1 : (10 to 30), more preferably from (20 to 30) : 1 : (11 to 20), more preferably from (23 to 25) : 1 : (12 to 15), and even more preferably from (23.5 to 24) : 1 : (13 to 14).

15. The process of any of claims 1 to 14, wherein the crystallization in step (2) involves heating of the mixture, preferably at a temperature ranging from 80 to 200°C, more preferably from 90 to 180°C, more preferably from 100 to 160°C, more preferably from 110 to 140°C, and even more preferably from 115 to 130°C.

16. The process of claim 15, wherein the crystallization in step (2) is conducted under solvothermal conditions.

17. The process of claim 15 or 16, wherein the crystallization in step (2) involves heating of the mixture for a period ranging from 5 to 200h, more preferably from 20 to 160h, more preferably from 60 to 140h, and even more preferably from 100 to 130h.

18. The process of any of claims 1 to 17, wherein after step (2) and prior to step (3) said process further comprises one or more of the following steps of:
(i) isolating the zeolitic material having a BEA-type framework structure obtained in step (2), preferably by filtration; and
(ii) optionally washing the zeolitic material having a BEA-type framework structure obtained in step (2); and/or
(iii) optionally drying the zeolitic material having a BEA-type framework structure obtained in step (2);
wherein the steps (i) and/or (ii) and/or (iii) can be conducted in any order, and
wherein one or more of said steps is preferably repeated one or more times.

19. The process of any of claims 1 to 18, wherein the zeolitic material having a BEA-type framework structure formed in step (2) comprises zeolite beta.

20. The process of any of claims 1 to 19, wherein the seed crystals comprise a zeolitic material having a BEA-type framework structure as synthesized according to the process of any one of claims 1 to 19, preferably zeolite beta.

21. A zeolitic material having a BEA-type framework structure obtainable and/or obtained according to any one of claims 1 to 20, having an X-ray diffraction pattern comprising at least the following reflections:
| Intensity (%) | Diffraction angle 2θ/° [Cu K(alpha 1)] |
|---|---|
| [11 - 31] | [21.07 - 21.27] |
| 100 | [22.12 - 22.32] |
| [13 - 33] | [25.01 - 25.21] |
| [17 - 37] | [25.53 - 25.73] |
| [13 - 33] | [26.78 - 26.98] |
| [11 - 31] | [28.39 - 28.59] |
| [22 - 42] | [29.24 - 29.44] |
| [6 - 26] | [30.00 - 30.20] |
| [9 - 29] | [32.86 - 33.26] |
| [11 - 31] | [42.90 - 43.30] |
wherein 100% relates to the intensity of the maximum peak in the X-ray powder diffraction pattern,
wherein the BEA-type framework structure comprises YO₂ and X₂O₃,
wherein Y is a tetravalent element, and X is a trivalent element, and
wherein the zeolitic material comprises Cu and/or Fe as non-framework elements in a loading ranging from 3 to 25 wt.-% calculated as Fe₂O₃ and CuO.

22. The zeolitic material of claim 21, wherein the YO₂ : X₂O₃ molar ratio ranges from 2 to 100, more preferably from 4 to 70, more preferably from 5 to 50, more preferably from 6 to 30, more preferably from 7 to 20, more preferably from 8 to 15, more preferably from 9 to 13, and even more preferably from 10 to 11.

23. The zeolitic material of any of claims 21 to 22, wherein the molar ratio of Cu : X₂O₃ ranges from 0.005 to 2, preferably from 0.01 to 1, more preferably from 0.05 to 0.7, more preferably from 0.1 to 0.5, more preferably from 0.15 to 0.4, more preferably from 0.18 to 0.35, more preferably from 0.2 to 0.3, and even more preferably from 0.22 to 0.28.

24. The zeolitic material of any of claims 21 to 23, wherein the molar ratio of Fe : X₂O₃ ranges from 0.005 to 2, preferably from 0.01 to 1, more preferably from 0.05 to 0.7, more preferably from 0.09 to 0.5, more preferably from 0.11 to 0.4, more preferably from 0.13 to 0.35, more preferably from 0.15 to 0.3, and even more preferably from 0.16 to 0.26.

25. The zeolitic material of any of claims 21 to 24, wherein Y is selected from the group consisting of Si, Sn, Ti, Zr, Ge, and a mixture of two or more thereof, Y preferably being Si.

26. The zeolitic material of any of claims 21 to 25, wherein X is selected from the group consisting of Al, B, In, Ga, and a mixture of two or more thereof, X preferably being Al.

27. Method for the treatment of NOₓ by selective catalytic reduction (SCR) comprising:
(a) providing a catalyst comprising a zeolitic material according to any of claims 21 to 26; and
(b) contacting a gas stream comprising NOₓ with the catalyst provided in step (a).

28. The method of claim 27, wherein the gas stream further comprises one or more reducing agents, the one or more reducing agents preferably comprising urea and/or ammonia, preferably ammonia.

29. The method of claim 27 or 28, wherein the gas stream comprises one or more NOₓ containing waste gases, preferably one or more NOₓ containing waste gases from one or more industrial processes, wherein more preferably the NOₓ containing waste gas stream comprises one or more waste gas streams obtained in processes for producing adipic acid, nitric acid, hydroxylamine derivatives, caprolactame, glyoxal, methyl-glyoxal, glyoxylic acid or in processes for burning nitrogeneous materials, including mixtures of waste gas streams from two or more of said processes.

30. The method of any of claims 27 to 29, wherein the gas stream comprises a NOₓ containing waste gas stream from an internal combustion engine, preferably from an internal combustion engine which operates under lean-burn conditions, and more preferably from a lean-burn gasoline engine or from a diesel engine.

31. Use of a zeolitic material according to any of claims 21 to 26 in a catalytic process, preferably as a catalyst, more preferably in selective catalytic reduction (SCR) of NOₓ, and preferably in the treatment of NOₓ containing exhaust gas by SCR, wherein more preferably the zeolitic material is used in the treatment of industrial or automotive exhaust gas, preferably in the treatment of automotive exhaust gas.

## Patentansprüche

1. Verfahren zur Herstellung eines zeolithischen Materials mit einer Gerüststruktur von BEA-Typ, die YO₂ und X₂O₃ umfasst, bei dem man:
(1) eine Mischung bereitstellt, die eine oder mehrere Quellen für YO₂, eine oder mehrere Quellen für X₂O₃ und Impfkristalle, die ein oder mehrere zeolithische Materialien mit einer Gerüststruktur vom BEA-Typ umfassen, umfasst;
(2) die in Schritt (1) erhaltene Mischung kristallisiert und
(3) das in Schritt (2) erhaltene zeolithische Material mit einer Gerüststruktur vom BEA-Typ einem Ionenaustauschprozess mit Cu und/oder Fe unterwirft, wobei man in Schritt (3)
(3a) eines oder mehrere der in dem zeolithischen Material mit einer Gerüststruktur vom BEA-Typ enthaltenen ionischen Nichtgerüstelemente gegen H⁺ und/oder NH₄⁺ austauscht und
(3b) das in Schritt (3a) erhaltene zeolithische Material mit einer Gerüststruktur vom BEA-Typ calciniert und
(3c) eines oder mehrere der in dem in Schritt (3b) erhaltenen zeolithischen Material mit einer Gerüststruktur vom BEA-Typ enthaltenen ionischen Nichtgerüstelemente gegen Cu und/oder Fe austauscht;
wobei Y für ein vierwertiges Element steht und X für ein dreiwertiges Element steht,
wobei die in Schritt (1) bereitgestellte und in Schritt (2) kristallisierte Mischung kein Organotemplat als strukturdirigierendes Mittel enthält und
wobei die Gesamtmenge an Cu und/oder Fe in dem in Schritt (3) erhaltenen ionenausgetauschten Material im Bereich von 3 bis 25 Gew.-%, berechnet als CuO und Fe₂O₃, liegt.

2. Verfahren nach Anspruch 1, bei dem das in Schritt (2) erhaltene zeolithische Material ein oder mehrere Alkalimetalle M umfasst, wobei M vorzugsweise aus der Gruppe bestehend aus Li, Na, K, Cs und Kombinationen von zwei oder mehr davon, weiter bevorzugt aus der Gruppe bestehend aus Li, Na, K und Kombinationen von zwei oder mehr davon, ausgewählt ist, wobei es sich weiter bevorzugt bei dem Alkalimetall M um Na und/oder K, noch weiter bevorzugt Na, handelt.

3. Verfahren nach Anspruch 1 oder 2, bei dem Y aus der Gruppe bestehend aus Si, Sn, Ti, Zr, Ge und einer Mischung von zwei oder mehr davon ausgewählt ist, wobei Y vorzugsweise Si ist.

4. Verfahren nach einem der Ansprüche 1 bis 3, bei dem die eine oder die mehreren Quellen für YO₂, die in Schritt (1) bereit gestellt werden, ein oder mehrere Silikate, vorzugsweise ein oder mehrere Alkalimetallsilikate, umfassen, wobei das Alkalimetall vorzugsweise aus der Gruppe bestehend aus Li, Na, K, Rb und Cs ausgewählt ist, wobei es sich weiter bevorzugt bei dem Alkalimetall um Na und/oder K handelt und es sich noch weiter bevorzugt bei dem Alkalimetall um Na handelt.

5. Verfahren nach Anspruch 4, bei dem die eine oder die mehreren Quellen für YO₂ ferner zusätzlich zu dem einen oder den mehreren Silikaten eine oder mehrere Kieselsäuren, vorzugsweise ein oder mehrere Kieselsäure-Hydrosole und/oder eine oder mehrere kolloidale Kieselsäuren und noch weiter bevorzugt eine oder mehrere kolloidale Kieselsäuren zusätzlich zu dem einen oder den mehreren Silikaten umfassen.

6. Verfahren nach Anspruch 4 oder 5, bei dem die in Schritt (1) bereitgestellte Mischung Wasserglas, vorzugsweise Natrium- und/oder Kaliumsilikat, weiter bevorzugt Natriumsilikat, umfasst.

7. Verfahren nach einem der Ansprüche 1 bis 6, bei dem X aus der Gruppe bestehend aus Al, B, In, Ga und einer Mischung von zwei oder mehr davon ausgewählt ist, wobei X vorzugsweise Al ist.

8. Verfahren nach einem der Ansprüche 1 bis 7, bei dem die eine oder die mehreren Quellen für X₂O₃ ein oder mehrere Aluminatsalze, vorzugsweise ein Aluminat eines Alkalimetalls, umfassen, wobei das Alkalimetall vorzugsweise aus der Gruppe bestehend aus Li, Na, K, Rb und Cs ausgewählt ist, wobei es sich weiter bevorzugt bei dem Alkalimetall um Na und/oder K handelt und es sich noch weiter bevorzugt bei dem Alkalimetall um Na handelt.

9. Verfahren nach einem der Ansprüche 1 bis 8, bei dem das YO₂:X₂O₃-Molverhältnis der Mischung gemäß Schritt (1) im Bereich von 1 bis 200, vorzugsweise von 5 bis 100, weiter bevorzugt von 10 bis 50, weiter bevorzugt von 15 bis 40, weiter bevorzugt von 20 bis 30, weiter bevorzugt von 23 bis 25 und noch weiter bevorzugt von 23,5 bis 24 liegt.

10. Verfahren nach einem der Ansprüche 1 bis 9, bei dem die Menge an Impfkristallen in der Mischung gemäß Schritt (1) im Bereich von 0,1 bis 30 Gew.-%, bezogen auf 100 Gew.-% YO₂ in der einen oder den mehreren Quellen für YO₂, vorzugsweise von 0,5 bis 20 Gew.-%, weiter bevorzugt von 1 bis 10 Gew.-%, weiter bevorzugt von 1,5 bis 5 Gew.-%, weiter bevorzugt von 2 bis 4 Gew.-% und noch weiter bevorzugt von 2,5 bis 3,5 Gew.-% liegt.

11. Verfahren nach einem der Ansprüche 1 bis 10, bei dem die Mischung gemäß Schritt (1) ferner ein oder mehrere Lösungsmittel umfasst, wobei das eine oder die mehreren Lösungsmittel vorzugsweise Wasser, weiter bevorzugt vollentsalztes Wasser, umfassen.

12. Verfahren nach Anspruch 11, bei dem das Molverhältnis H₂O:YO₂ der Mischung gemäß Schritt (1) im Bereich von 5 bis 100, vorzugsweise von 10 bis 50, weiter bevorzugt von 13 bis 30, weiter bevorzugt von 15 bis 20 und noch weiter bevorzugt von 17 bis 18 liegt.

13. Verfahren nach einem der Ansprüche 2 bis 12, bei dem das Molverhältnis M:YO₂ in der Mischung gemäß Schritt (1) im Bereich von 0,05 bis 5, vorzugsweise von 0, 1 bis 2, weiter bevorzugt von 0, 3 bis 1, weiter bevorzugt von 0,4 bis 0,8, weiter bevorzugt von 0,45 bis 0,7, weiter bevorzugt von 0,5 bis 0,65 und noch weiter bevorzugt von 0,55 bis 0,6 liegt.

14. Verfahren nach einem der Ansprüche 2 bis 13, bei dem das YO₂:X₂O₃:M-Molverhältnis in der Mischung gemäß Schritt (1) im Bereich von (1 bis 200):1:(0,5 bis 100), vorzugsweise von (5 bis 100) :1: (5 bis 75), weiter bevorzugt von (10 bis 50) : 1: (8 bis 50), weiter bevorzugt von (15 bis 40) : 1 : (10 bis 30), weiter bevorzugt von (20 bis 30) : 1: (11 bis 20), weiter bevorzugt von (23 bis 25) : 1: (12 bis 15) und noch weiter bevorzugt von (23,5 bis 24) : 1 : (13 bis 14) liegt.

15. Verfahren nach einem der Ansprüche 1 bis 14, bei dem man bei der Kristallisation in Schritt (2) die Mischung erhitzt, vorzugsweise auf eine Temperatur im Bereich von 80 bis 200 °C, weiter bevorzugt von 90 bis 180 °C, weiter bevorzugt von 100 bis 160 °C, weiter bevorzugt von 110 bis 140 °C und noch weiter bevorzugt von 115 bis 130 °C.

16. Verfahren nach Anspruch 15, bei dem man die Kristallisation in Schritt (2) unter solvothermalen Bedingungen durchführt.

17. Verfahren nach Anspruch 15 oder 16, bei dem man bei der Kristallisation in Schritt (2) die Mischung über einen Zeitraum im Bereich von 5 bis 200 h, weiter bevorzugt von 20 bis 160 h, weiter bevorzugt von 60 bis 140 h und noch weiter bevorzugt von 100 bis 130 h umfasst.

18. Verfahren nach einem der Ansprüche 1 bis 17, wobei das Verfahren nach Schritt (2) und vor Schritt (3) ferner einen oder mehrere der folgenden Schritte umfasst, bei denen man:
(i) das in Schritt (2) erhaltene zeolithische Material mit einer Gerüststruktur vom BEA-Typ isoliert, vorzugsweise durch Filtration; und
(ii) gegebenenfalls das in Schritt (2) erhaltene zeolithische Material mit einer Gerüststruktur von BEA-Typ wäscht und/oder
(iii) gegebenenfalls das in Schritt (2) erhaltene zeolithische Material mit einer Gerüststruktur von BEA-Typ trocknet;
wobei die Schritte (i) und/oder (ii) und/oder (iii) in beliebiger Reihenfolge durchgeführt werden können und
wobei einer oder mehrere der Schritte vorzugsweise ein- oder mehrmals wiederholt werden.

19. Verfahren nach einem der Ansprüche 1 bis 18, wobei das in Schritt (2) gebildete zeolithische Material mit einer Gerüststruktur vom BEA-Typ Zeolith Beta umfasst.

20. Verfahren nach einem der Ansprüche 1 bis 19, wobei die Impfkristalle ein wie bei der Synthese gemäß dem Verfahren nach einem der Ansprüche 1 bis 19 einfallendes zeolithisches Material mit einer Gerüststruktur vom BEA-Typ, vorzugsweise Zeolith Beta, umfassen.

21. Zeolithisches Material mit einer Gerüststruktur vom BEA-Typ, erhältlich und/oder erhalten gemäß einem der Ansprüche 1 bis 20, mit einem Röntgenbeugungsmuster, das mindestens die folgenden Reflexe umfasst:
| Intensität (%) | Beugungswinkel 2θ/° [Cu K(alpha 1)] |
|---|---|
| [11-31] | [21,07-21,27] |
| 100 | [22,12-22,32] |
| [13-33] | [25,01-25,21] |
| [17-37] | [25,53-25,73] |
| [13-33] | [26,78-26,98] |
| [11- 1] | [28,39-28,59] |
| [22-42] | [29,24-29,44] |
| [6-26] | [30,00-30,20] |
| [9-29] | [32,86-33,26] |
| [11-31] | [42,90-43,30] |
wobei sich die Angabe 100 % auf die Intensität des höchsten Peaks im Röntgenpulverbeugungsmuster bezieht,
wobei die Gerüststruktur vom BEA-Typ YO₂ und X₂O₃ umfasst,
wobei Y für ein vierwertiges Element steht und X für ein dreiwertiges Element steht, und
wobei das zeolithische Material Cu und/oder Fe als Nichtgerüstelemente in einer Beladung im Bereich von 3 bis 25 Gew.-%, berechnet als Fe₂O₃ und CuO, umfasst.

22. Zeolithisches Material nach Anspruch 21, wobei das das YO₂:X₂O₃-Molverhältnis im Bereich von 2 bis 100, weiter bevorzugt von 4 bis 70, weiter bevorzugt von 5 bis 50, weiter bevorzugt von 6 bis 30, weiter bevorzugt von 7 bis 20, weiter bevorzugt von 8 bis 15, weiter bevorzugt von 9 bis 13 und noch weiter bevorzugt von 10 bis 11 liegt.

23. Zeolithisches Material nach einem der Ansprüche 21 bis 22, wobei das Molverhältnis von Cu:X₂O₃ im Bereich von 0,005 bis 2, vorzugsweise von 0,01 bis 1, weiter bevorzugt von 0,05 bis 0,7, weiter bevorzugt von 0,1 bis 0,5, weiter bevorzugt von 0,15 bis 0,4, weiter bevorzugt von 0,18 bis 0,35, weiter bevorzugt von 0,2 bis 0,3 und noch weiter bevorzugt von 0,22 bis 0,28 liegt.

24. Zeolithisches Material nach einem der Ansprüche 21 bis 23, wobei das Molverhältnis von Fe:X₂O₃ im Bereich von 0,005 bis 2, vorzugsweise von 0,01 bis 1, weiter bevorzugt von 0,05 bis 0,7, weiter bevorzugt von 0,09 bis 0,5, weiter bevorzugt von 0,11 bis 0,4, weiter bevorzugt von 0,13 bis 0,35, weiter bevorzugt von 0,15 bis 0,3 und noch weiter bevorzugt von 0,16 bis 0,26 liegt.

25. Zeolithisches Material nach einem der Ansprüche 21 bis 24, wobei Y aus der Gruppe bestehend aus Si, Sn, Ti, Zr, Ge und einer Mischung von zwei oder mehr davon ausgewählt ist, wobei Y vorzugsweise Si ist.

26. Zeolithisches Material nach einem der Ansprüche 21 bis 25, wobei X aus der Gruppe bestehend aus Al, B, In, Ga und einer Mischung von zwei oder mehr davon ausgewählt ist, wobei X vorzugsweise Al ist.

27. Verfahren zur Behandlung von NOₓ durch selektive katalytische Reduktion (SCR), bei dem man:
(a) einen Katalysator, der ein zeolithisches Material gemäß einem der Ansprüche 21 bis 26 umfasst, bereitstellt und
(b) einen Gasstrom, der NOₓ umfasst, mit dem in Schritt (a) bereitgestellten Katalysator in Kontakt bringt.

28. Verfahren nach Anspruch 27, bei dem der Gasstrom ferner ein oder mehrere Reduktionsmittel umfasst, wobei das eine oder die mehreren Reduktionsmittel vorzugsweise Harnstoff und/oder Ammoniak, vorzugsweise Ammoniak, umfassen.

29. Verfahren nach Anspruch 27 oder 28, wobei der Gasstrom ein oder mehrere NOₓ enthaltende Abgase, vorzugsweise ein oder mehrere NOₓ enthaltende Abgase aus einem oder mehreren technischen Verfahren, umfasst, wobei weiter bevorzugt der NOₓ enthaltende Abgasstrom einen oder mehrere Abgasströme umfasst, die bei Verfahren zur Herstellung von Adipinsäure, Salpetersäure, Hydroxylaminderivaten, Caprolactam, Glyoxal, Methylglyoxal, Glyoxylsäure oder bei Verfahren zum Verbrennen von stickstoffhaltigen Materialien anfallen, einschließlich Mischungen von Abgasströmen aus zwei oder mehr der Verfahren umfasst.

30. Verfahren nach einem der Ansprüche 27 bis 29, bei dem der Gasstrom einen NOₓ enthaltenden Abgasstrom aus einem Verbrennungsmotor, vorzugsweise aus einem Verbrennungsmotor, vorzugsweise aus einem im Magerbetrieb laufenden Verbrennungsmotor und weiter bevorzugt aus einem Benzin-Magermotor oder aus einem Dieselmotor umfasst.

31. Verwendung eines zeolithischen Materials gemäß einem der Ansprüche 21 bis 26 beim katalytischen Verfahren, vorzugsweise als Katalysator, weiter bevorzugt bei der selektiven katalytischen Reduktion (SCR) von NOₓ und vorzugsweise bei der Behandlung von NOₓ enthaltendem Abgas durch SCR, wobei weiter bevorzugt das zeolithische Material bei der Behandlung von technischem Abgas oder Autoabgas, vorzugsweise bei der Behandlung von Autoabgas, verwendet wird.

## Revendications

1. Procédé pour la production d'un matériau zéolithique possédant une structure de cadre de type BEA comprenant YO₂ et X₂O₃, ledit procédé comprenant les étapes de
(1) préparation d'un mélange comprenant une ou plusieurs sources pour YO₂, une ou plusieurs sources pour X₂O₃, et des germes cristallins comprenant un ou plusieurs matériaux zéolithique possédant une structure de cadre de type BEA ;
(2) cristallisation du mélange obtenu dans l'étape (1) ; et
(3) soumission du matériau zéolithique possédant une structure de cadre de type BEA obtenu dans l'étape (2) à une procédure d'échange d'ions avec Cu et/ou Fe,
(3) comprenant
(3a) l'échange d'un ou plusieurs éléments parmi les éléments ioniques non de cadre contenus dans le matériau zéolithique possédant une structure de cadre de type BEA obtenu dans l'étape (2) contre H⁺ et/ou NH₄⁺ ; et
(3b) la calcination du matériau zéolithique possédant une structure de cadre de type BEA obtenu dans l'étape (3a) ; et
(3c) l'échange d'un ou plusieurs éléments parmi les éléments ioniques non de cadre contenus dans le matériau zéolithique possédant une structure de cadre de type BEA obtenu dans l'étape (3b) contre Cu et/ou Fe ;
Y étant un élément tétravalent, et X étant un élément trivalent,
le mélange mis à disposition dans l'étape (1) et cristallisé dans l'étape (2) ne contenant pas une matrice organique en tant qu'agent de direction de structure, et
la quantité totale de Cu et/ou de Fe dans le matériau échangé par des ions obtenu dans l'étape (3) se situant dans la plage de 3 à 25 % en poids calculée comme CuO et Fe₂O₃.

2. Procédé selon la revendication 1, le matériau zéolithique obtenu dans l'étape (2) comprenant un ou plusieurs métaux alcalins M, M étant préférablement choisi dans le groupe constitué par Li, Na, K, Cs, et des combinaisons de deux ou plus de ceux-ci, plus préférablement dans le groupe constitué par Li, Na, K, et des combinaisons de deux ou plus de ceux-ci, plus préférablement le métal alcalin M étant Na et/ou K, encore plus préférablement Na.

3. Procédé selon la revendication 1 ou 2, Y étant choisi dans le groupe constitué par Si, Sn, Ti, Zr, Ge, et un mélange de deux ou plus de ceux-ci, Y étant préférablement Si.

4. Procédé selon l'une quelconque des revendications 1 à 3, la ou les sources pour YO₂ mises à disposition dans l'étape (1) comprenant un ou plusieurs silicates, préférablement un ou plusieurs silicates de métal alcalin, le métal alcalin étant préférablement choisi dans le groupe constitué par Li, Na, K, Rb, et Cs, plus préférablement le métal alcalin étant Na et/ou K, et encore plus préférablement le métal alcalin étant Na.

5. Procédé selon la revendication 4, la ou les sources pour YO₂ comprenant en outre une ou plusieurs silices en plus du ou des silicates, préférablement un ou plusieurs hydrosols de silice et/ou une ou plusieurs silices colloïdales, et encore plus préférablement une ou plusieurs silices colloïdales en plus du ou des silicates.

6. Procédé selon la revendication 4 ou 5, le mélange mis à disposition dans l'étape (1) comprenant du verre à eau, préférablement un silicate de sodium et/ou de potassium, plus préférablement un silicate de sodium.

7. Procédé selon l'une quelconque des revendications 1 à 6, X étant choisi dans le groupe constitué par Al, B, In, Ga, et un mélange de deux ou plus de ceux-ci, X étant préférablement Al.

8. Procédé selon l'une quelconque des revendications 1 à 7, la ou les sources pour X₂O₃ comprenant un ou plusieurs sels d'aluminate, préférablement un aluminate d'un métal alcalin, le métal alcalin étant préférablement choisi dans le groupe constitué par Li, Na, K, Rb, et Cs, plus préférablement le métal alcalin étant Na et/ou K, et encore plus préférablement le métal alcalin étant Na.

9. Procédé selon l'une quelconque des revendications 1 à 8, le rapport molaire YO₂ : X₂O₃ du mélange selon l'étape (1) se situant dans la plage de 1 à 200, préférablement de 5 à 100, plus préférablement de 10 à 50, plus préférablement de 15 à 40, plus préférablement de 20 à 30, plus préférablement de 23 à 25, et encore plus préférablement de 23,5 à 24.

10. Procédé selon l'une quelconque des revendications 1 à 9, la quantité de germes cristallins compris dans le mélange selon l'étape (1) se situant dans la plage de 0,1 à 30 % en poids sur la base de 100 % en poids de YO₂ dans la ou les sources pour YO₂, préférablement de 0,5 à 20 % en poids, plus préférablement de 1 à 10 % en poids, plus préférablement de 1,5 à 5 % en poids, plus préférablement de 2 à 4 % en poids, et encore plus préférablement de 2,5 à 3,5 % en poids.

11. Procédé selon l'une quelconque des revendications 1 à 10, le mélange selon l'étape (1) comprenant en outre un ou plusieurs solvants, ledit solvant ou lesdits solvants comprenant préférablement de l'eau, plus préférablement de l'eau désionisée.

12. Procédé selon la revendication 11, le rapport molaire H₂O : YO₂ du mélange selon l'étape (1) se situant dans la plage de 5 à 100, préférablement de 10 à 50, plus préférablement de 13 à 30, plus préférablement de 15 à 20, et encore plus préférablement de 17 à 18.

13. Procédé selon l'une quelconque des revendications 2 à 12, le rapport molaire M : YO₂ dans le mélange selon l'étape (1) se situant dans la plage de 0,05 à 5, préférablement de 0,1 à 2, plus préférablement de 0,3 à 1, plus préférablement de 0,4 à 0,8, plus préférablement de 0,45 à 0,7, plus préférablement de 0,5 à 0,65, et encore plus préférablement de 0,55 à 0,6.

14. Procédé selon l'une quelconque des revendications 2 à 13, le rapport molaire YO₂ : X₂O₃ : M dans le mélange selon l'étape (1) se situant dans la plage de (1 à 200) : 1 : (0,5 à 100), préférablement de (5 à 100) : 1 : (5 à 75), plus préférablement de (10 à 50) : 1 : (8 à 50), plus préférablement de (15 à 40) : 1 : (10 à 30), plus préférablement de (20 à 30) : 1 : (11 à 20), plus préférablement de (23 à 25) : 1 : (12 à 15), et encore plus préférablement de (23,5 à 24) : 1 : (13 à 14).

15. Procédé selon l'une quelconque des revendications 1 à 14, la cristallisation dans l'étape (2) impliquant le chauffage du mélange, préférablement à une température dans la plage de 80 à 200 °C, plus préférablement de 90 à 180 °C, plus préférablement de 100 à 160 °C, plus préférablement de 110 à 140 °C, et encore plus préférablement de 115 à 130 °C.

16. Procédé selon la revendication 15, la cristallisation dans l'étape (2) étant conduite dans des conditions solvothermales.

17. Procédé selon la revendication 15 ou 16, la cristallisation dans l'étape (2) impliquant le chauffage du mélange pendant une période dans la plage de 5 à 200 h, plus préférablement de 20 à 160 h, plus préférablement de 60 à 140 h, et encore plus préférablement de 100 à 130 h.

18. Procédé selon l'une quelconque des revendications 1 à 17, ledit procédé comprenant en outre, après l'étape (2) et avant l'étape (3), l'une ou plusieurs des étapes suivantes :
(i) isolement du matériau zéolithique possédant une structure de cadre de type BEA obtenu dans l'étape (2), préférablement par filtration ; et
(ii) éventuellement lavage du matériau zéolithique possédant une structure de cadre de type BEA obtenu dans l'étape (2) ; et/ou
(iii) éventuellement séchage du matériau zéolithique possédant une structure de cadre de type BEA obtenu dans l'étape (2) ;
les étapes (i) et/ou (ii) et/ou (iii) pouvant être conduites dans un ordre quelconque, et une ou plusieurs desdites étapes étant préférablement répétées une ou plusieurs fois.

19. Procédé selon l'une quelconque des revendications 1 à 18, le matériau zéolithique possédant une structure de cadre de type BEA formé dans l'étape (2) comprenant une zéolithe bêta.

20. Procédé selon l'une quelconque des revendications 1 à 19, les germes cristallins comprenant un matériau zéolithique possédant une structure de cadre de type BEA tel que synthétisé selon le procédé selon l'une quelconque des revendications 1 à 19, préférablement une zéolithe bêta.

21. Matériau zéolithique possédant une structure de cadre de type BEA pouvant être obtenu et/ou obtenu selon l'une quelconque des revendications 1 à 20, possédant un diagramme de diffraction des rayons X comprenant au moins les réflexions suivantes :
| Intensité (%) | Angle de diffraction 2θ/° [Cu K(alpha 1)] |
|---|---|
| [11 à 31] | [21,07 à 21,27] |
| 100 | [22,12 à 22,32] |
| [13 à 33] | [25,01 à 25,21] |
| [17 à 37] | [25,53 à 25,73] |
| [13 à 33] | [26,78 à 26,98] |
| [11 à 31] | [28,39 à 28,59] |
| [22 à 42] | [29,24 à 29,44] |
| [6 à 26] | [30,00 à 30,20] |
| [9 à 29] | [32,86 à 33,26] |
| [11 à 31] | [42,90 à 43,30] |
100 % faisant référence à l'intensité du pic maximum dans le diagramme de diffraction des rayons X de poudre,
la structure de cadre de type BEA comprenant YO₂ et X₂O₃,
Y étant un élément tétravalent, et X étant un élément trivalent, et
le matériau zéolithique comprenant Cu et/ou Fe en tant qu'éléments non de cadre en une charge dans la plage de 3 à 25 % en poids calculée comme CuO et Fe₂O₃.

22. Matériau zéolithique selon la revendication 21, le rapport molaire YO₂ : X₂O₃ se situant dans la plage de 2 à 100, plus préférablement de 4 à 70, plus préférablement de 5 à 50, plus préférablement de 6 à 30, plus préférablement de 7 à 20, plus préférablement de 8 à 15, plus préférablement de 9 à 13, et encore plus préférablement de 10 à 11.

23. Matériau zéolithique selon l'une quelconque des revendications 21 et 22, le rapport molaire de Cu : X₂O₃ se situant dans la plage de 0,005 à 2, préférablement de 0,01 à 1, plus préférablement de 0,05 à 0,7, plus préférablement de 0,1 à 0,5, plus préférablement de 0,15 à 0,4, plus préférablement de 0,18 à 0,35, plus préférablement de 0,2 à 0,3, et encore plus préférablement de 0,22 à 0,28.

24. Matériau zéolithique selon l'une quelconque des revendications 21 à 23, le rapport molaire de Fe : X₂O₃ se situant dans la plage de 0,005 à 2, préférablement de 0,01 à 1, plus préférablement de 0,05 à 0,7, plus préférablement de 0,09 à 0,5, plus préférablement de 0,11 à 0,4, plus préférablement de 0,13 à 0,35, plus préférablement de 0,15 à 0,3, et encore plus préférablement de 0,16 à 0,26.

25. Matériau zéolithique selon l'une quelconque des revendications 21 à 24, Y étant choisi dans le groupe constitué par Si, Sn, Ti, Zr, Ge, et un mélange de deux ou plus de ceux-ci, Y étant préférablement Si.

26. Matériau zéolithique selon l'une quelconque des revendications 21 à 25, X étant choisi dans le groupe constitué par Al, B, In, Ga, et un mélange de deux ou plus de ceux-ci, X étant préférablement Al.

27. Procédé pour le traitement des NOₓ par réduction catalytique sélective (RCS) comprenant :
(a) la mise à disposition d'un catalyseur comprenant un matériau zéolithique selon l'une quelconque des revendications 21 26 ; et
(b) la mise en contact d'un flux de gaz comprenant des NOₓ avec le catalyseur mis à disposition dans l'étape (a).

28. Procédé selon la revendication 27, le flux de gaz comprenant en outre un ou plusieurs agents réducteurs, l'agent ou les agents réducteurs comprenant préférablement de l'urée et/ou de l'ammoniac, préférablement de l'ammoniac.

29. Procédé selon la revendication 27 ou 28, le flux de gaz comprenant un ou plusieurs gaz d'échappement contenant des NOₓ, préférablement un ou plusieurs gaz d'échappement contenant des NOₓ provenant d'un ou plusieurs procédés industriels, plus préférablement le flux de gaz d'échappement contenant des NOₓ comprenant un ou plusieurs flux de gaz d'échappement obtenus dans des procédés pour la production d'acide adipique, d'acide nitrique, de dérivés d'hydroxylamine, de caprolactame, de glyoxal, de méthyl-glyoxal, d'acide glyoxylique ou dans des procédés pour la combustion de matériaux azotés, y compris des mélanges de flux de gaz d'échappement provenant de deux ou plus desdits procédés.

30. Procédé selon l'une quelconque des revendications 27 à 29, le flux de gaz comprenant un flux de gaz d'échappement contenant des NOₓ provenant d'un moteur à combustion interne, préférablement provenant d'un moteur à combustion interne qui fonctionne dans des conditions de mélange pauvre, et plus préférablement provenant d'un moteur à essence à mélange pauvre ou provenant d'un moteur diesel.

31. Utilisation d'un matériau zéolithique selon l'une quelconque des revendications 21 à 26 dans un procédé catalytique, préférablement en tant que catalyseur, plus préférablement dans la réduction catalytique sélective (RCS) des NOₓ, et préférablement dans le traitement de gaz d'échappement contenant des NOₓ par RCS, plus préférablement le matériau zéolithique étant utilisé dans le traitement de gaz d'échappement industriel ou automobile, préférablement dans le traitement de gaz d'échappement automobile.
